# EUROPEAN PATENT APPLICATION

(11) **EP 4 738 949 A1**
(43) Date of publication of application: **06.05.2026**
(21) Application number: 23942914.5
(22) Date of filing: 29.06.2023
(51) Int. Cl.: H04W 52/36

(54) **REPORTING METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/104297
(87) International publication number: WO 2025/000406

(57) **Abstract**

The present disclosure provides a reporting method and apparatus, a device, and a storage medium. The method comprises: in a transmission scenario of uplink simultaneous transmission across multi-antenna panels (STxMP), when a terminal is configured to simultaneously report N power headroom reports (PHRs) for PHR reporting of a physical uplink shared channel (PUSCH) transmission channel, on the basis of a PUSCH transmission scheme and/or a PHR timeline requirement of the terminal, the terminal determines that the N PHRs are respectively actual PHRs or virtual PHRs, and performs measurement reporting of the actual PHRs and/or virtual PHRs, wherein N is an integer greater than or equal to 2. The present disclosure provides a PHR determination method for an STxMP transmission scenario, which is used for determining that PHRs are actual PHRs or virtual PHRs, so that, after determining that the PHRs are actual PHRs or virtual PHRs, the terminal can perform corresponding measurement reporting for the PHRs, thereby achieving successful reporting of the PHRs in the STxMP transmission scenario.

## Description

### FIELD

The present disclosure relates to the field of communication technologies, and in particular, to a reporting method and apparatus, a communication device, a communication system, and a storage medium.

### BACKGROUND

In a communication system, a network device typically configures a terminal to report Power Headroom Reports (PHRs) for one or more Physical Uplink Shared Channels (PUSCHs), respectively, so that the terminal reports PHRs for the PUSCH transmission channels, thereby enabling the network device to perform corresponding scheduling for the terminal's uplink transmission based on the PHRs reported by the terminal. Optionally, when triggering the PHR reporting, the terminal usually needs to determine whether the PHR is a virtual PHR or an actual PHR based on the transmission situations of the PUSCH transmission channels. Optionally, the transmission situation corresponding to the virtual PHR is where the PUSCH transmission channel is not transmitted or the signal of the PUSCH transmission channel is not transmitted, and the transmission situation corresponding to an actual PHR is where the PUSCH transmission channel is actually transmitted or the signal of the PUSCH transmission channel is actually transmitted.

Optionally, in new versions of communication systems, to improve system transmission throughput and transmission reliability, Uplink Simultaneous Transmission Across Multiple Panels (STxMP) has been introduced. However, in STxMP scenarios, there is currently no clear method for determining whether a PHR is a virtual PHR or an actual PHR.

### SUMMARY

The present disclosure proposes a reporting method and apparatus, a communication device, a communication system, and a storage medium.
According to a first aspect of embodiments of the present disclosure, a reporting method is provided, including:

in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, determining by the terminal, based on a PUSCH transmission scheme of the terminal and/or a PHR timeline requirement, that the N PHRs are respectively actual PHRs or virtual PHRs, and performing a measurement and reporting of the actual PHRs and/or the virtual PHRs, where N is an integer greater than or equal to 2.

According to a second aspect of embodiments of the present disclosure, a reporting method is provided, including:
in an uplink STxMP transmission scenario, in a case where a terminal is configured to simultaneously report N PHRs for reporting PHRs of PUSCH transmission channels, receiving, by a network device, the N PHRs reported by the terminal, where N is an integer greater than or equal to 2, and the N PHRs include actual PHRs and/or virtual PHRs.

According to a third aspect of embodiments of the present disclosure, a reporting method is provided, applied to a communication system, where the communication system includes a terminal and a network device, the method includes at least one of:
in an uplink STxMP transmission scenario, in a case where a terminal is configured to simultaneously report N PHRs for reporting PHRs of PUSCH transmission channels, determining by the terminal, based on a PUSCH transmission scheme of the terminal and/or a PHR timeline requirement, that the N PHRs are respectively actual PHRs or virtual PHRs, and performing a measurement and reporting of the actual PHRs and/or the virtual PHRs, where N is an integer greater than or equal to 2; or
in an STxMP transmission scenario, in a case where a terminal is configured to simultaneously report N PHRs for reporting PHRs of PUSCH transmission channels, receiving, by a network device, the N PHRs reported by the terminal, where the N PHRs include actual PHRs and/or virtual PHRs.

According to a fourth aspect of embodiments of the present disclosure, a terminal is provided, including:
a determination module configured to, in an uplink STxMP transmission scenario, in a case where a terminal is configured to simultaneously report N PHRs for reporting PHRs of PUSCH transmission channels, determine, based on a PUSCH transmission scheme of the terminal and/or a PHR timeline requirement, that the N PHRs are respectively actual PHRs or virtual PHRs, where N is an integer greater than or equal to 2; and
a sending module, configured to perform a measurement and reporting of the actual PHRs and/or the virtual PHRs.

According to a fifth aspect of embodiments of the present disclosure, a network device is provided, including:
a receiving module configured to, in an uplink STxMP transmission scenario, in a case where a terminal is configured to simultaneously report N PHRs for reporting PHRs of PUSCH transmission channels, receive the N PHRs reported by the terminal, where N is an integer greater than or equal to 2, and the N PHRs include actual PHRs and/or virtual PHRs.

According to a sixth aspect of embodiments of the present disclosure, a communication device is provided, including:
one or more processors;
where the one or more processors are configured to invoke instructions to cause the communication device to perform the reporting method according to the first aspect or the second aspect.

According to a seventh aspect of embodiments of the present disclosure, a communication system is provided, including a terminal and a network device, where the terminal is configured to implement the reporting method according to the first aspect, and the network device is configured to implement the reporting method according to the first aspect or the second aspect.

According to an eighth aspect of embodiments of the present disclosure, a storage medium is provided, having stored therein instructions that, when running on a communication device, cause the communication device to perform the reporting method according to the first aspect or the second aspect.

### BRIEF DESCRIPTION OF THE DRAWINGS

The above and/or additional aspects and advantages of the present disclosure will become apparent and readily understood from the following description of embodiments taken in conjunction with the drawings, where
FIG. 1A is a schematic structural diagram of a communication system according to embodiments of the present disclosure;
FIG. 2A-2D are schematic interaction diagrams of a reporting method provided by an embodiment of the present disclosure;
FIG. 3A-3E are schematic flowcharts of a reporting method provided by another embodiment of the present disclosure;
FIG. 4A-4E are schematic flowcharts of a reporting method provided by yet another embodiment of the present disclosure;
FIG. 5 is a schematic flowchart of a reporting method provided by yet another embodiment of the present disclosure;
FIG. 6A is a schematic structural diagram of a terminal provided by an embodiment of the present disclosure;
FIG. 6B is a schematic structural diagram of a network device provided by an embodiment of the present disclosure;
FIG. 7A is a schematic structural diagram of a communication device provided by an embodiment of the present disclosure; and
FIG. 7B is a schematic structural diagram of a chip provided by an embodiment of the present disclosure.

### DETAILED DESCRIPTION

Embodiments of the present disclosure provides a reporting method and apparatus, a communication device, a communication system, and a storage medium.

According to a first aspect, embodiments of the present disclosure propose a reporting method, including:
in an uplink simultaneous transmission across multiple panels (STxMP) transmission scenario, in a case where a terminal is configured to simultaneously report N Power Headroom Reports (PHRs) for reporting PHRs of Physical Uplink Shared Channel (PUSCH) transmission channels, the terminal determining, based on a PUSCH transmission scheme of the terminal and/or a PHR timeline requirement, that the N PHRs are respectively actual PHRs or virtual PHRs, and performing a measurement and reporting of the actual PHRs and/or the virtual PHRs, where N is an integer greater than or equal to 2.

In the above embodiment, a PHR determination method is provided for multi-STxMP transmission scenarios to determine whether a PHR is an actual PHR or a virtual PHR, so that after the terminal determines whether a PHR is an actual PHR or a virtual PHR, it can perform corresponding measurement and reporting for that PHR, thereby achieving successful PHR reporting in multi-STxMP transmission scenarios. Consequently, the network device can successfully schedule the terminal's uplink transmission based on the PHR reported by the terminal, thereby ensuring communication transmission throughput.

In conjunction with the first aspect, in some embodiments, the STxMP transmission scenario includes multiple Transmission Reception Points (TRPs);
the transmission scheme includes at least one of: performing a Multi-Transmission Reception Point (MTRP) transmission in the STxMP transmission scenario, and performing a Single Transmission Reception Point (STRP) transmission in the STxMP transmission scenario.

In conjunction with the first aspect, in some embodiments, the N PHRs correspond respectively to the PUSCH transmission channels of different antenna panels, or different TCI states, or different SRS resource sets, or different TRPs, and the N PHRs are respectively used to report related power information of the PUSCH transmission channels corresponding respectively to the N PHRs.

In conjunction with the first aspect, in some embodiments, the PHR timeline requirement includes:
a PUSCH transmission carrying data and a PUSCH transmission carrying a PHR being configured to be sent in a same time domain unit.

In conjunction with the first aspect, in some embodiments, the terminal determining, based on the PUSCH transmission scheme of the terminal and/or the PHR timeline requirement, that the N PHRs are respectively actual PHRs or virtual PHRs includes:
in a case where the PUSCH transmission scheme is an MTRP transmission and the MTRP transmission meets the PHR timeline requirement, determining that the N PHRs are all actual PHRs; where a value of N is the same as a quantity of channels in which PUSCH transmissions are sent in the MTRP transmission, the N PHRs correspond respectively to different PUSCH transmission channels in the MTRP transmission, and the N PHRs are respectively used to report related power information of the PUSCH transmission channels corresponding respectively to the N PHRs.

In the above embodiment, for the scenario of MTRP transmission, a specific solution is provided for how to determine, based on the PUSCH transmission scheme and/or the PHR timeline requirement, that the N PHRs are respectively actual PHRs or virtual PHRs, so that when MTRP transmission occurs, it can be successfully determined whether a PHR is an actual PHR or a virtual PHR, and corresponding measurement and reporting can be performed for that PHR, thereby achieving successful PHR reporting in the multi-STxMP MTRP transmission scenario.

In conjunction with the first aspect, in some embodiments, the terminal determining, based on the PUSCH transmission scheme of the terminal and/or the PHR timeline requirement, that the N PHRs are respectively actual PHRs or virtual PHRs includes:
in a case where the PUSCH transmission scheme is an STRP transmission using multiple antenna panels and the STRP transmission meets the PHR timeline requirement, determining that the N PHRs are all actual PHRs, where a value of N is the same as a quantity of channels in which PUSCH transmissions are sent using the multiple antenna panels, the N PHRs correspond respectively to the PUSCH transmission channels of different antenna panels, and the N PHRs are respectively used to report related power information of the PUSCH transmission channels corresponding respectively to the N PHRs.

In the above embodiment, for the scenario of STRP transmission using multiple antenna panels, a specific solution is provided for how to determine, based on the PUSCH transmission scheme and/or the PHR timeline requirement, that the N PHRs are respectively actual PHRs or virtual PHRs, so that when performing STRP transmission via multiple antenna panels, it can be successfully determined whether a PHR is an actual PHR or a virtual PHR, and corresponding measurement and reporting can be performed for that PHR, thereby achieving successful PHR reporting in the multi-STxMP STRP transmission scenario.

In conjunction with the first aspect, in some embodiments, the terminal determining, based on the PUSCH transmission scheme of the terminal and/or the PHR timeline requirement, that the N PHRs are respectively actual PHRs or virtual PHRs includes:
in a case where the PUSCH transmission scheme is an STRP transmission and the STRP transmission meets the PHR timeline requirement, determining that, among the N PHRs, PHRs corresponding to channels in which PUSCH transmissions are sent in the STRP transmission are the actual PHRs, and remaining PHRs among the N PHRs are the virtual PHRs, where the actual PHRs are used to report related power information of PUSCH transmission channels corresponding to the actual PHRs, and the virtual PHRs are used to report related power information of PUSCH transmission channels corresponding respectively to the virtual PHRs.

In the above embodiment, for the scenario of STRP transmission, a specific solution is provided for how to determine, based on the PUSCH transmission scheme and/or the PHR timeline requirement, that the N PHRs are respectively actual PHRs or virtual PHRs, so that when performing STRP transmission, it can be successfully determined whether a PHR is an actual PHR or a virtual PHR, and corresponding measurement and reporting can be performed for that PHR, thereby achieving successful PHR reporting in the multi-STxMP STRP transmission scenario.

In conjunction with the first aspect, in some embodiments, the terminal determining, based on the PUSCH transmission scheme of the terminal and/or the PHR timeline requirement, that the N PHRs are respectively actual PHRs or virtual PHRs includes:
in a case where the PUSCH transmission scheme of the terminal does not meet the PHR timeline requirement, determining that the N PHRs are all virtual PHRs, where a value of N is the same as a quantity of TRPs in the STxMP transmission scenario, the N PHRs respectively correspond to the PUSCH transmission channels of different TRPs, and the N PHRs are respectively used to report related power information of the PUSCH transmission channels corresponding respectively to the N PHRs.

In the above embodiment, for the scenario where the PUSCH transmission scheme does not meet the PHR timeline requirement, a specific solution is provided for how to determine, based on the PUSCH transmission scheme and/or the PHR timeline requirement, that the N PHRs are respectively actual PHRs or virtual PHRs, so that when the PUSCH transmission scheme does not meet the PHR timeline requirement, it can be successfully determined whether a PHR is an actual PHR or a virtual PHR, and corresponding measurement and reporting can be performed for that PHR, thereby achieving successful PHR reporting in the multi-STxMP transmission scenario.

In conjunction with the first aspect, in some embodiments, the method further includes:
measuring the virtual PHRs.

In conjunction with the first aspect, in some embodiments, measuring the virtual PHRs includes at least one of:
in a case where the PUSCH transmission in the STRP transmission is at least one of a dynamic grant physical uplink shared channel (DG PUSCH) or a configured grant physical uplink shared channel type 2 (CG PUSCH Type 2), measuring the virtual PHRs based on at least part of first parameters configured by a network device for the STRP transmission, where the first parameters are used to implement the PUSCH transmission in the STRP transmission; or
in a case where the PUSCH transmission in the STRP transmission is a CG PUSCH Type 1, measuring the virtual PHRs based on second parameters configured by a network device for the PUSCH transmission channels corresponding respectively to the virtual PHRs respectively, where the second parameters are used to implement PUSCH transmissions in the PUSCH transmission channels corresponding respectively to the virtual PHRs.

In conjunction with the first aspect, in some embodiments, the at least part of the first parameters includes at least one of:
a Modulation and Coding Scheme (MCS);
a Resource Block (RB) allocation.

In the above embodiment, when measuring virtual PHRs in STRP transmission, the measurement is based on either the first parameters already configured for the STRP transmission or the second parameters already configured for the PUSCH transmission channels corresponding respectively to the virtual PHRs. The first parameters are used to implement the PUSCH transmission in the STRP transmission, and the second parameters are used to implement PUSCH transmissions in the PUSCH transmission channels corresponding respectively to the virtual PHRs. That is, these first and second parameters are the parameters actually used during PUSCH transmission. Therefore, measuring virtual PHRs based on these first and second parameters can make the measured virtual PHRs reflect as closely as possible the related power information of the PUSCH transmission channels corresponding to those virtual PHRs when actually performing PUSCH transmission, thereby improving the measurement accuracy of the virtual PHRs.

In conjunction with the first aspect, in some embodiments, the method further includes:
respectively measuring the N PHRs that are virtual PHRs.

In conjunction with the first aspect, in some embodiments, respectively measuring the N PHRs that are virtual PHRs includes:
in a case where a PUSCH transmission configured in the STxMP transmission scenario is a CG PUSCH type 1 or includes a CG PUSCH type 1, measuring the virtual PHRs based on third parameters configured for the PUSCH transmission channels respectively corresponding to the virtual PHRs, where the third parameters are used to implement CG PUSCH transmissions in the PUSCH transmission channels corresponding respectively to the virtual PHRs.

In the above embodiment, if the PUSCH transmission configured in the STxMP transmission scenario is a CG PUSCH type 1 or includes a CG PUSCH type 1, then when measuring virtual PHRs, the measurement can be based on the third parameters already configured for the PUSCH transmission channels corresponding respectively to the virtual PHRs. The third parameters are used to implement CG PUSCH transmissions in the PUSCH transmission channels corresponding respectively to the virtual PHRs, i.e., these third parameters are the parameters actually used during CG PUSCH transmission. Therefore, measuring virtual PHRs based on these third parameters can make the measured virtual PHRs reflect as closely as possible the related power information of the PUSCH transmission channels corresponding to those virtual PHRs when actually performing PUSCH transmission, thereby improving the measurement accuracy of the virtual PHRs.

In conjunction with the first aspect, in some embodiments, the virtual PHRs reported by the terminal include maximum transmit powers (Pcmax) respectively corresponding to different TRPs, or different antenna panels, or different TCI states, or different SRS resource sets; where the maximum transmit powers are calculated based on at least one of a Maximum Power Reduction (MPR), an Additional Maximum Power Reduction (A-MPR), or a Power Management Maximum Power Reduction (P-MPR).

In the above embodiment, when the terminal reports virtual PHRs, it also reports the maximum transmit powers corresponding to different TRPs, or different antenna panels, or different TCI states, or different SRS resource sets. This enables the network device to perform more accurate scheduling for uplink transmission based on these maximum transmit powers, thereby ensuring the stability of uplink communication.

In conjunction with the first aspect, in some embodiments, the PHRs are type 1 PHRs.

According to a second aspect, embodiments of the present disclosure propose a reporting method, including: in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, receiving, by a network device, the N PHRs reported by the terminal, where N is an integer greater than or equal to 2, and the N PHRs include actual PHRs and/or virtual PHRs.

In conjunction with the second aspect, in some embodiments, the STxMP transmission scenario includes multiple Transmission Reception Points (TRPs);
the transmission scheme includes at least one of: performing a Multi-Transmission Reception Point (MTRP) transmission in the STxMP transmission scenario, and performing a Single Transmission Reception Point (STRP) transmission in the STxMP transmission scenario.

In conjunction with the second aspect, in some embodiments, the N PHRs correspond respectively to the PUSCH transmission channels of different antenna panels, or different TCI states, or different SRS resource sets, or different TRPs; the N PHRs are respectively used to report related power information of the PUSCH transmission channels corresponding respectively to the N PHRs.

In conjunction with the second aspect, in some embodiments, the PHR timeline requirement includes:
a PUSCH carrying data and a PUSCH carrying a PHR being configured to be sent in a same time domain unit.

In conjunction with the second aspect, in some embodiments, in a case where the PUSCH transmission scheme is an MTRP transmission and the MTRP transmission meets the PHR timeline requirement, the N PHRs are all actual PHRs, where a value of N is the same as a quantity of channels in which PUSCH transmissions are sent in the MTRP transmission, the N PHRs correspond respectively to different PUSCH transmission channels in the MTRP transmission, and the N PHRs are respectively used to report related power information of the PUSCH transmission channels corresponding respectively to the N PHRs.

In conjunction with the second aspect, in some embodiments, in a case where the PUSCH transmission scheme is an STRP transmission using multiple antenna panels and the STRP transmission meets the PHR timeline requirement, the N PHRs are all actual PHRs, where a value of N is the same as a quantity of channels in which PUSCH transmissions are sent using the multiple antenna panels, the N PHRs correspond respectively to the PUSCH transmission channels of different antenna panels, and the N PHRs are respectively used to report related power information of the PUSCH transmission channels corresponding respectively to the N PHRs.

In conjunction with the second aspect, in some embodiments, in a case where the PUSCH transmission scheme is an STRP transmission and the STRP transmission meets the PHR timeline requirement, among the N PHRs, PHRs corresponding to channels in which PUSCH transmissions are sent in the STRP transmission are the actual PHRs, and remaining PHRs among the N PHRs are the virtual PHRs, where the actual PHRs are used to report related power information of PUSCH transmission channels corresponding to the actual PHRs, and the virtual PHRs are used to report related power information of PUSCH transmission channels corresponding respectively to the virtual PHRs.

In conjunction with the second aspect, in some embodiments, in a case where the PUSCH transmission scheme of the terminal does not meet the PHR timeline requirement, the N PHRs are all virtual PHRs, where a value of N is the same as a quantity of TRPs in the STxMP transmission scenario, the N PHRs respectively correspond to the PUSCH transmission channels of different TRPs, and the N PHRs are respectively used to report related power information of the PUSCH transmission channels corresponding respectively to the N PHRs.

In conjunction with the second aspect, in some embodiments, in a case where the PUSCH transmission in the STRP transmission is at least one of a dynamic grant physical uplink shared channel (DG PUSCH) or a configured grant physical uplink shared channel type 2 (CG PUSCH Type 2), the virtual PHRs are measured based on at least part of first parameters configured by the network device for the STRP transmission, where the first parameters are used to implement the PUSCH transmission in the STRP transmission; and

in a case where the PUSCH transmission in the STRP transmission is a CG PUSCH Type 1, the virtual PHRs are measured based on second parameters configured by the network device for the PUSCH transmission channels corresponding respectively to the virtual PHRs respectively, where the second parameters are used to implement PUSCH transmissions in the PUSCH transmission channels corresponding respectively to the virtual PHRs.

In conjunction with the second aspect, in some embodiments, the at least part of the first parameters includes at least one of:
MCS;
RB allocation.

In conjunction with the second aspect, in some embodiments, in a case where a PUSCH transmission configured in the STxMP transmission scenario is a CG PUSCH type 1 or includes a CG PUSCH type 1, the virtual PHRs are measured based on third parameters configured for the PUSCH transmission channels respectively corresponding to the virtual PHRs, where the third parameters are used to implement CG PUSCH transmissions in the PUSCH transmission channels corresponding respectively to the virtual PHRs.

In conjunction with the second aspect, in some embodiments, the virtual PHRs reported by the terminal include maximum transmit powers (Pcmax) respectively corresponding to different TRPs, or different antenna panels, or different TCI states, or different SRS resource sets, where the maximum transmit powers (Pcmax) are calculated based on at least one of a maximum power reduction (MPR), an additional maximum power reduction (A-MPR), or a power management maximum power reduction (P-MPR).

In conjunction with the second aspect, in some embodiments, the PHRs are type 1 PHRs.

According to a third aspect, embodiments of the present disclosure propose a reporting method, applied to a communication system, where the communication system includes a terminal and a network device, and the method includes at least one of:
in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, determining by the terminal, based on a PUSCH transmission scheme of the terminal and/or a PHR timeline requirement, that the N PHRs are respectively actual PHRs or virtual PHRs, and performing a measurement and reporting of the actual PHRs and/or the virtual PHRs, where N is an integer greater than or equal to 2; or
in an STxMP transmission scenario, in a case where a terminal is configured to simultaneously report N PHRs for reporting PHRs of PUSCH transmission channels, receiving, by a network device, the N PHRs reported by the terminal, where the N PHRs include actual PHRs and/or virtual PHRs.

According to a fourth aspect, embodiments of the present disclosure propose a terminal, including:
a determination module configured to, in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, determine, based on a PUSCH transmission scheme of the terminal and/or a PHR timeline requirement, that the N PHRs are respectively actual PHRs or virtual PHRs, where N is an integer greater than or equal to 2; and
a sending module, configured to perform a measurement and reporting of the actual PHRs and/or the virtual PHRs.

In conjunction with the fourth aspect, in some embodiments, the STxMP transmission scenario includes multiple Transmission Reception Points (TRPs);
the transmission scheme includes at least one of: performing a Multi-Transmission Reception Point (MTRP) transmission in the STxMP transmission scenario, and performing a Single Transmission Reception Point (STRP) transmission in the STxMP transmission scenario.

In conjunction with the fourth aspect, in some embodiments, the N PHRs correspond respectively to the PUSCH transmission channels of different antenna panels, or different TCI states, or different SRS resource sets, or different TRPs; the N PHRs are respectively used to report related power information of the PUSCH transmission channels corresponding respectively to the N PHRs.

In conjunction with the fourth aspect, in some embodiments, the PHR timeline requirement includes:
a PUSCH transmission carrying data and a PUSCH transmission carrying a PHR being configured to be sent in a same time domain unit.

In conjunction with the fourth aspect, in some embodiments, the determination module is configured to:
in a case where the PUSCH transmission scheme is an MTRP transmission and the MTRP transmission meets the PHR timeline requirement, determine that the N PHRs are all actual PHRs, where a value of N is the same as a quantity of channels in which PUSCH transmissions are sent in the MTRP transmission, the N PHRs correspond respectively to different PUSCH transmission channels in the MTRP transmission, and the N PHRs are respectively used to report related power information of the PUSCH transmission channels corresponding respectively to the N PHRs.

In conjunction with the fourth aspect, in some embodiments, the determination module is configured to:
in a case where the PUSCH transmission scheme is an STRP transmission using multiple antenna panels and the STRP transmission meets the PHR timeline requirement, determine that the N PHRs are all actual PHRs, where a value of N is the same as a quantity of channels in which PUSCH transmissions are sent using the multiple antenna panels, the N PHRs correspond respectively to the PUSCH transmission channels of different antenna panels, and the N PHRs are respectively used to report related power information of the PUSCH transmission channels corresponding respectively to the N PHRs.

In conjunction with the fourth aspect, in some embodiments, the determination module is configured to:
in a case where the PUSCH transmission scheme is an STRP transmission and the STRP transmission meets the PHR timeline requirement, determining that, among the N PHRs, PHRs corresponding to channels in which PUSCH transmissions are sent in the STRP transmission are the actual PHRs, and remaining PHRs among the N PHRs are the virtual PHRs, where the actual PHRs are used to report related power information of PUSCH transmission channels corresponding to the actual PHRs, and the virtual PHRs are used to report related power information of PUSCH transmission channels corresponding respectively to the virtual PHRs.

In conjunction with the fourth aspect, in some embodiments, the determination module is configured to:
in a case where the PUSCH transmission scheme of the terminal does not meet the PHR timeline requirement, determining that the N PHRs are all virtual PHRs, where a value of N is the same as a quantity of TRPs in the STxMP transmission scenario, the N PHRs respectively correspond to the PUSCH transmission channels of different TRPs, and the N PHRs are respectively used to report related power information of the PUSCH transmission channels corresponding respectively to the N PHRs.

In conjunction with the fourth aspect, in some embodiments, the terminal further includes:
a module for measuring the virtual PHRs.

In conjunction with the fourth aspect, in some embodiments, the terminal is further configured to perform at least one of:
in a case where the PUSCH transmission in the STRP transmission is at least one of a dynamic grant physical uplink shared channel (DG PUSCH) or a configured grant physical uplink shared channel type 2 (CG PUSCH Type 2), measuring the virtual PHRs based on at least part of first parameters configured by a network device for the STRP transmission, where the first parameters are used to implement the PUSCH transmission in the STRP transmission; or
in a case where the PUSCH transmission in the STRP transmission is a CG PUSCH Type 1, measuring the virtual PHRs based on second parameters configured by a network device for the PUSCH transmission channels corresponding respectively to the virtual PHRs respectively, where the second parameters are used to implement PUSCH transmissions in the PUSCH transmission channels corresponding respectively to the virtual PHRs.

In conjunction with the fourth aspect, in some embodiments, the at least part of the first parameters includes at least one of:
a Modulation and Coding Scheme (MCS);
a Resource Block (RB) allocation.

In conjunction with the fourth aspect, in some embodiments, the terminal further includes:
a module for respectively measuring the N PHRs that are virtual PHRs.

In conjunction with the fourth aspect, in some embodiments, the terminal is further configured to:
in a case where a PUSCH transmission configured in the STxMP transmission scenario is a CG PUSCH type 1 or includes a CG PUSCH type 1, measure the virtual PHRs based on third parameters configured for the PUSCH transmission channels respectively corresponding to the virtual PHRs, where the third parameters are used to implement CG PUSCH transmissions in the PUSCH transmission channels corresponding respectively to the virtual PHRs.

In conjunction with the fourth aspect, in some embodiments, the virtual PHRs reported by the terminal include maximum transmit powers (Pcmax) respectively corresponding to different TRPs, or different antenna panels, or different TCI states, or different SRS resource sets; where the maximum transmit powers are calculated based on at least one of a Maximum Power Reduction (MPR), an Additional Maximum Power Reduction (A-MPR), or a Power Management Maximum Power Reduction (P-MPR).

In conjunction with the fourth aspect, in some embodiments, the PHRs are type 1 PHRs.

According to a fifth aspect, embodiments of the present disclosure propose a network device, including:
a receiving module configured to, in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, receive the N PHRs reported by the terminal, where N is an integer greater than or equal to 2, and the N PHRs include actual PHRs and/or virtual PHRs.

In conjunction with the fifth aspect, in some embodiments, the STxMP transmission scenario includes multiple Transmission Reception Points (TRPs);
the transmission scheme includes at least one of: performing a Multi-Transmission Reception Point (MTRP) transmission in the STxMP transmission scenario, and performing a Single Transmission Reception Point (STRP) transmission in the STxMP transmission scenario.

In conjunction with the fifth aspect, in some embodiments, the N PHRs correspond respectively to the PUSCH transmission channels of different antenna panels, or different TCI states, or different SRS resource sets, or different TRPs; the N PHRs are respectively used to report related power information of the PUSCH transmission channels corresponding respectively to the N PHRs.

In conjunction with the fifth aspect, in some embodiments, the PHR timeline requirement includes:
a PUSCH carrying data and a PUSCH carrying a PHR being configured to be sent in a same time domain unit.

In conjunction with the fifth aspect, in some embodiments, in a case where the PUSCH transmission scheme is an MTRP transmission and the MTRP transmission meets the PHR timeline requirement, the N PHRs are all actual PHRs; where a value of N is the same as a quantity of channels in which PUSCH transmissions are sent in the MTRP transmission, different PHRs correspond to different PUSCH transmission channels in the MTRP transmission, and the N PHRs are respectively used to report related power information of the PUSCH transmission channels corresponding respectively to the N PHRs.

In conjunction with the fifth aspect, in some embodiments, in a case where the PUSCH transmission scheme is a Single Transmission Reception Point (STRP) transmission using multiple antenna panels and the STRP transmission meets the PHR timeline requirement, the N PHRs are all actual PHRs; where a value of N is the same as a quantity of channels in which PUSCH transmissions are sent using the multiple antenna panels, different PHRs correspond to PUSCH transmission channels of different antenna panels, and the N PHRs are respectively used to report related power information of the PUSCH transmission channels corresponding respectively to the N PHRs.

In conjunction with the fifth aspect, in some embodiments, in a case where the PUSCH transmission scheme is an STRP transmission and the STRP transmission meets the PHR timeline requirement, among the N PHRs, PHRs corresponding to channels in which PUSCH transmissions are sent in the STRP transmission are actual PHRs, and the remaining PHRs among the N PHRs are virtual PHRs; where the actual PHRs are used to report related power information of the PUSCH transmission channels corresponding to the actual PHRs; and the virtual PHRs are used to report related power information of the PUSCH transmission channels corresponding respectively to the virtual PHRs.

In conjunction with the fifth aspect, in some embodiments, in a case where the PUSCH transmission scheme of the terminal does not meet the PHR timeline requirement, the N PHRs are all virtual PHRs; where a value of N is the same as a quantity of TRPs in the STxMP transmission scenario, different PHRs correspond to PUSCH transmission channels of different TRPs, and the N PHRs are respectively used to report related power information of the PUSCH transmission channels corresponding respectively to the N PHRs.

In conjunction with the fifth aspect, in some embodiments, when the PUSCH transmission in the STRP transmission is at least one of a Dynamic Grant Physical Uplink Shared Channel (DG PUSCH) or a Configured Grant Physical Uplink Shared Channel Type 2 (CG PUSCH Type 2), the virtual PHRs are measured based on at least part of first parameters configured by the network device for the STRP transmission, where the first parameters are used to implement the PUSCH transmission in the STRP transmission;
when the PUSCH transmission in the STRP transmission is a CG PUSCH Type 1, the virtual PHRs are measured based on second parameters configured by the network device for the PUSCH transmission channels corresponding respectively to the virtual PHRs, where the second parameters are used to implement PUSCH transmissions in the PUSCH transmission channels corresponding respectively to the virtual PHRs.

In conjunction with the fifth aspect, in some embodiments, the at least part of the first parameters includes at least one of:
MCS;
RB allocation.

In conjunction with the fifth aspect, in some embodiments, when the PUSCH transmission configured in the STxMP transmission scenario is a CG PUSCH type 1 or includes a CG PUSCH type 1, the virtual PHRs are measured based on third parameters configured for the PUSCH transmission channels respectively corresponding to the virtual PHRs, where the third parameters are used to implement CG PUSCH transmissions in the PUSCH transmission channels corresponding respectively to the virtual PHRs.

In conjunction with the fifth aspect, in some embodiments, the virtual PHRs reported by the terminal include maximum transmit powers (Pcmax) respectively corresponding to different TRPs, or different antenna panels, or different TCI states, or different SRS resource sets; where the maximum transmit powers are calculated based on at least one of a Maximum Power Reduction (MPR), an Additional Maximum Power Reduction (A-MPR), or a Power Management Maximum Power Reduction (P-MPR).

In conjunction with the fifth aspect, in some embodiments, the PHRs are type 1 PHRs.

According to a sixth aspect, embodiments of the present disclosure propose a communication device, including: one or more processors; one or more memories for storing instructions; where the processors are configured to invoke the instructions to cause the communication device to perform the reporting method as described in the first aspect, optional implementations of the first aspect, the second aspect, or optional implementations of the second aspect.

According to a seventh aspect, embodiments of the present disclosure propose a communication system, including: a terminal and a network device; where the terminal is configured to perform the method as described in the first aspect and optional implementations thereof, and the network device is configured to perform the method as described in the second aspect and optional implementations thereof.

According to an eighth aspect, embodiments of the present disclosure propose a storage medium, where the storage medium stores instructions that, when run on a communication device, cause the communication device to perform the method as described in the first aspect, optional implementations of the first aspect, the second aspect, or optional implementations of the second aspect.

According to a ninth aspect, embodiments of the present disclosure propose a program product that, when executed by a communication device, causes the communication device to perform the method as described in the first aspect, optional implementations of the first aspect, the second aspect, or optional implementations of the second aspect.

According to a tenth aspect, embodiments of the present disclosure propose a computer program that, when run on a computer, causes the computer to perform the method as described in the first aspect, optional implementations of the first aspect, the second aspect, or optional implementations of the second aspect.

It can be understood that the aforementioned terminal, network device, communication device, communication system, storage medium, program product, and computer program are all used to perform the method proposed in the embodiments of the present disclosure. Therefore, the beneficial effects they can achieve can refer to the beneficial effects in the corresponding method, which will not be repeated here.

The embodiments of the present disclosure propose an invention title. In some embodiments, the reporting method and terms such as information reporting method, information sending method, information receiving method can be used interchangeably, the communication apparatus and terms such as information processing apparatus, information sending apparatus, information receiving apparatus can be used interchangeably, and the information processing system, communication system, information sending system, information receiving system can be used interchangeably.

The embodiments of the present disclosure are not exhaustive, but merely illustrative of some embodiments and are not intended to specifically limit the scope of protection of the present disclosure. Where there is no contradiction, each step in a certain embodiment can be implemented as an independent embodiment, and the steps can be combined arbitrarily. For example, a solution with some steps removed from a certain embodiment can also be implemented as an independent embodiment, and the order of the steps in a certain embodiment can be arbitrarily exchanged. In addition, optional implementations in a certain embodiment can be arbitrarily combined. Moreover, the embodiments can be arbitrarily combined with each other. For example, part or all of the steps of different embodiments can be arbitrarily combined, and a certain embodiment can be arbitrarily combined with optional implementations of other embodiments.

In the various embodiments of the present disclosure, unless otherwise specified and unless there is a logical conflict, terms and/or descriptions among the embodiments are consistent and can be referenced mutually. Technical features in different embodiments can be combined according to their intrinsic logical relationships to form new embodiments.

The terms used in the embodiments of the present disclosure are for the purpose of describing particular embodiments only and are not intended to limit the present disclosure.

In the embodiments of the present disclosure, unless otherwise stated, elements expressed in singular form, such as "a", "an", "the", "said", "above-mentioned", "aforementioned", "this", etc., can mean "one and only one", or can mean "one or more", "at least one", etc. For example, when using articles such as "a", "an", "the" in English translation, the noun following the article can be understood as singular or plural.

In the embodiments of the present disclosure, "a plurality of" means two or more.

In some embodiments, terms such as "at least one of", "at least one item of", "at least one of", "one or more", "a plurality of", "multiple", etc., can be used interchangeably.

Descriptions such as "at least one of A, B, C..." or "A and/or B and/or C..." in the embodiments of the present disclosure include the case where any one of A, B, C... exists alone, and also include the case of any combination of any multiple of A, B, C..., each case can exist independently. For example, "at least one of A, B, C" includes the cases of A alone, B alone, C alone, combination of A and B, combination of A and C, combination of B and C, and combination of A, B, and C. For example, "A and/or B" includes the cases of A alone, B alone, and combination of A and B.

In some embodiments, statements such as "in a case A, in another case B", "in response to a case A, in response to another case B", etc., may, according to the situation, include the following technical solutions: performing A regardless of B, i.e., A in some embodiments; performing B regardless of A, i.e., B in some embodiments; selectively performing A or B, i.e., selecting to perform A or B in some embodiments; performing both A and B, i.e., A and B in some embodiments. When there are more branches such as A, B, C, etc., it is similar to the above.

Prefixes such as "first", "second", etc., in the embodiments of the present disclosure are merely for distinguishing different described objects and do not impose limitations on the position, order, priority, quantity, or content of the described objects. The description of the objects refers to the description in the claims or the context of the embodiments and should not be construed as an undue limitation due to the use of prefixes. For example, if the described object is a "field", then the ordinal numbers before "field" in "first field" and "second field" do not limit the position or order between the fields, "first" and "second" do not limit whether the "fields" they modify are in the same message, nor do they limit the sequence of "first field" and "second field". Another example, if the described object is a "level", then the ordinal numbers before "level" in "first level" and "second level" do not limit the priority between the levels. Yet another example, the quantity of the described object is not limited by the ordinal number. Taking "first device" as an example, the quantity of "device" can be one or more. Furthermore, objects modified by different prefixes can be the same or different. For example, if the described object is a "device", then "first device" and "second device" can be the same device or different devices, and their types can be the same or different. Another example, if the described object is "information", then "first information" and "second information" can be the same information or different information, and their content can be the same or different.

In some embodiments, "include A", "contain A", "used to indicate A", "carry A" can be interpreted as directly carrying A, or indirectly indicating A.

In some embodiments, terms such as "in response to...", "in response to determining...", "in the case of...", "when...", "if...", etc., can be used interchangeably.

In some embodiments, terms such as "greater than", "greater than or equal to", "not less than", "more than", "more than or equal to", "not fewer than", "higher than", "higher than or equal to", "not lower than", "above", etc., can be used interchangeably. Terms such as "less than", "less than or equal to", "not greater than", "fewer than", "fewer than or equal to", "not more than", "lower than", "lower than or equal to", "not higher than", "below", etc., can be used interchangeably.

In some embodiments, apparatuses, etc., can be interpreted as physical or virtual. Their names are not limited to the names recorded in the embodiments. Terms such as "apparatus", "equipment", "device", "circuit", "network element", "node", "function", "unit", "section", "system", "network", "chip", "chip system", "entity", "subject", etc., can be used interchangeably.

In some embodiments, "network" can be interpreted as apparatuses included in the network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc., can be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., can be used interchangeably.

In some embodiments, an access network device, a core network device, or a network device can be replaced by a terminal. For example, the structures where communication between an access network device, a core network device, or a network device and a terminal is replaced by communication between multiple terminals (e.g., which may also be called device-to-device (D2D), vehicle-to-everything (V2X), etc.) can also apply to various embodiments of the present disclosure. In this case, the structure may be such that the terminal has all or part of the functions of the access network device. In addition, terms such as "uplink", "downlink", etc., may also be replaced by terms corresponding to inter-terminal communication (e.g., "side"). For example, uplink channels, downlink channels, etc., may be replaced by side channels; uplink links, downlink links, etc., may be replaced by side links.

In some embodiments, a terminal may be replaced by an access network device, a core network device, or a network device. In this case, the structure may be such that the access network device, core network device, or network device has all or part of the functions of the terminal.

In some embodiments, obtaining data, information, etc., may comply with the laws and regulations of the country where it is located.

In some embodiments, data, information, etc., may be obtained after obtaining user consent.

Furthermore, each element, each row, or each column in the tables of the embodiments of the present disclosure can be implemented as an independent embodiment. Any combination of elements, rows, or columns can also be implemented as an independent embodiment.

The correspondence relationships shown in the tables of the present disclosure may be configured or predefined. The values of information in each table are merely examples and may be configured as other values. The present disclosure does not limit this. When configuring the correspondence relationships between configuration information and various parameters, it is not necessarily required to configure all correspondence relationships shown in the tables. For example, in the tables of the present disclosure, the correspondence relationships shown in certain rows may also not be configured. Also, appropriate adjustments may be made based on the above tables, such as splitting, merging, etc. The names of parameters shown in the headings of the above tables may also be other names understandable by communication apparatuses, and the values or representations of their parameters may also be other values or representations understandable by communication apparatuses. When implementing the above tables, other data structures may also be used, such as arrays, queues, containers, stacks, linear lists, pointers, linked lists, trees, graphs, structs, classes, heaps, hash tables, etc.

"Predefined" in the present disclosure can be understood as defined, predefined, stored, prestored, pre-negotiated, pre-configured, solidified, or pre-burned.

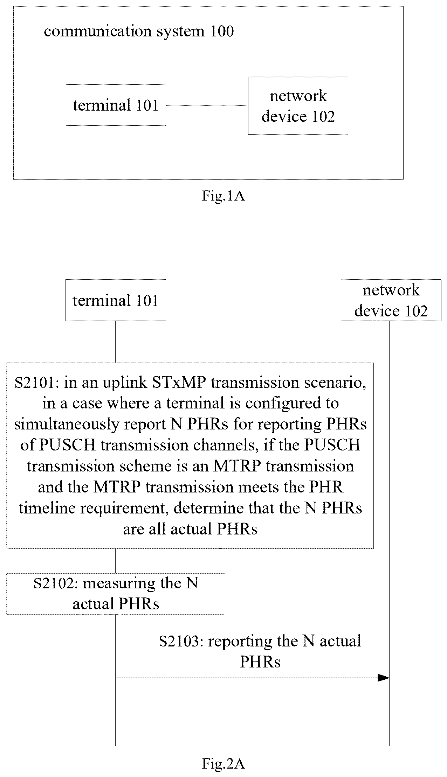

FIG. 1A is a schematic structural diagram of a communication system according to an embodiment of the present disclosure. As shown in FIG. 1A, a communication system 100 may include a terminal 101 and a network device 102. Optionally, the network device may include at least one of an access network device and a core network device.

In some embodiments, the terminal 101 includes, for example, at least one of a mobile phone, a wearable device, an IoT device, a car with communication capability, a smart car, a tablet (Pad), a computer with wireless transceiver capability, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but is not limited thereto.

In some embodiments, an access network device is, for example, a node or device that connects a terminal to a wireless network. The access network device may include at least one of an evolved NodeB (eNB), a next generation evolved NodeB (ng-eNB), a next generation NodeB (gNB), a NodeB (NB), a home NodeB (HNB), a home evolved NodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in other communication systems, or an access node in a wireless fidelity (WiFi) system, but is not limited thereto.

In some embodiments, the technical solution of the present disclosure may be applicable to an Open RAN architecture. In this case, the interfaces between access network devices or within an access network device involved in the embodiments of the present disclosure may become internal interfaces of the Open RAN, and the processes and information interactions between these internal interfaces may be implemented by software or programs.

In some embodiments, an access network device may be composed of a central unit (CU) and a distributed unit (DU), where the CU may also be called a control unit. Using the CU-DU structure, the protocol layers of the access network device can be split, with the functions of some protocol layers placed under centralized control of the CU, and the remaining part or all of the functions of other protocol layers distributed in the DUs, which are centrally controlled by the CU, but not limited thereto.

In some embodiments, a core network device may be one device including one or more network elements, or may be multiple devices or device groups each including all or part of one or more network elements. A network element may be virtual or physical. The core network includes, for example, at least one of an Evolved Packet Core (EPC), a 5G Core Network (5GCN), or a Next Generation Core (NGC).

It can be understood that the communication system described in the embodiments of the present disclosure is to illustrate the technical solutions of the embodiments of the present disclosure more clearly and does not constitute a limitation on the technical solutions proposed in the embodiments of the present disclosure. Those of ordinary skill in the art will understand that as the system architecture evolves and new business scenarios emerge, the technical solutions proposed in the embodiments of the present disclosure are equally applicable to similar technical problems.

The following embodiments of the present disclosure can be applied to the communication system 100 shown in FIG. 1A, or part of the entities, but are not limited thereto. The entities shown in FIG. 1A are examples. The communication system may include all or part of the entities in FIG. 1A and may also include other entities not shown in FIG. 1A. The number and form of each entity are arbitrary. The connection relationships between entities are examples. The entities may or may not be connected, and the connection may be in any manner, either direct or indirect, and either wired or wireless.

The embodiments of the present disclosure can be applied to Long Term Evolution (LTE), LTE-Advanced (LTE-A), LTE-Beyond (LTE-B), SUPER 3G, IMT-Advanced, a fourth-generation mobile communication system (4G), a fifth-generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a Device-to-Device (D2D) system, a Machine to Machine (M2M) system, an Internet of Things (IoT) system, Vehicle-to-Everything (V2X), a system using other reporting methods, a next-generation system based on them, etc. In addition, the combination of multiple systems (e.g., a combination of LTE or LTE-A and 5G, etc.) may also be applied.

Optionally, in a communication system, in uplink STxMP, a terminal usually dynamically switches between single transmission reception point (STRP) transmission and multi-transmission reception point (MTRP) transmission. Among them, when the terminal dynamically switches between STRP transmission and MTRP transmission, how to determine whether a PHR is an actual PHR or a virtual PHR is also a technical problem that urgently needs to be solved. Moreover, the parameters used by the terminal when measuring virtual PHRs have a small amount of information, resulting in low measurement accuracy of PHRs.

FIG. 2A is a schematic interaction diagram of a reporting method according to an embodiment of the present disclosure. As shown in FIG. 2A, this embodiment of the present disclosure relates to a reporting method, applied to a communication system 100. The method includes:

Step 2101: in an uplink STxMP transmission scenario, in a case where a terminal is configured to simultaneously report N PHRs for reporting PHRs of PUSCH transmission channels, if the PUSCH transmission scheme is an MTRP transmission and the MTRP transmission meets the PHR timeline requirement, determine that the N PHRs are all actual PHRs, where N is an integer greater than or equal to 2.

Optionally, in some embodiments, the STxMP transmission scenario may include multiple TRPs (e.g., two TRPs) and multiple antenna panels of the terminal (e.g., two antenna panels). Optionally, the terminal may use one or more antenna panels to send uplink signals to the TRPs. Optionally, the multiple TRPs may respectively correspond to Transmission Configuration Indicator states (TCI states) and/or sounding reference signal (SRS) resource sets. Optionally, when the terminal uses antenna panels to send uplink signals to a TRP, it may send the uplink signals based on the TCI state and/or SRS resource set corresponding to that TRP.

Optionally, the STxMP transmission may include at least one of STxMP transmission based on Multi Downlink Control Information (M-DCI) and STxMP transmission based on Single Downlink Control Information (S-DCI). Also, the transmission in the STxMP transmission scenario may be MTRP transmission (i.e., the terminal communicates with multiple TRPs) or STRP transmission (i.e., the terminal communicates with a certain TRP). It should be noted that in some embodiments, when the STxMP transmission scenario includes two TRPs, the MTRP transmission may refer to the terminal communicating with all TRPs. This embodiment uses "MTRP transmission refers to the terminal communicating with all TRPs" as an example for introduction, but is not limited thereto.

Optionally, in some embodiments, different PHRs among the N PHRs may correspond to PUSCH transmission channels of different antenna panels, or different TCI states, or different SRS resource sets, or different TRPs. The N PHRs are respectively used to report related power information of the PUSCH transmission channels corresponding respectively to the N PHRs.

Optionally, the "PUSCH transmission channel of an antenna panel" can be understood as the PUSCH transmission channel between that antenna panel and a TRP when using that antenna panel to send uplink signals to the TRP. The "PUSCH transmission channel of a TCI state" can be understood as the PUSCH transmission channel between the terminal and a TRP when using that TCI state to send uplink signals to the TRP. The "PUSCH transmission channel of an SRS resource set" can be understood as the PUSCH transmission channel between the terminal and a TRP when using that SRS resource set to send uplink signals to the TRP. The "PUSCH transmission channel of a TRP" can be understood as the PUSCH transmission channel between the terminal and that TRP. Optionally, the value of N may be the same as the number of antenna panels, or the number of TCI states, or the number of SRS resource sets, or the number of TRPs.

Optionally, in some embodiments, the PHR timeline requirement may include: a PUSCH transmission carrying data and a PUSCH transmission carrying a PHR being configured to be sent in a same time domain unit. Optionally, the time domain unit may be, for example, at least one of a symbol or a slot. Optionally, based on this PHR timeline requirement, the PHR can be classified into actual PHRs and virtual PHRs. Optionally, when a PHR corresponding to a certain PUSCH transmission channel meets the PHR timeline requirement, that PHR may be an actual PHR. When a PHR corresponding to a certain PUSCH transmission channel does not meet the PHR timeline requirement, that PHR may be a virtual PHR.

Optionally, in some embodiments, when the PUSCH transmission scheme is the aforementioned MTRP transmission, the value of N may be the same as the number of channels in which PUSCH transmissions are sent in the MTRP transmission (i.e., the value of N may be the same as the number of TRPs in the MTRP transmission). Different PHRs correspond to different PUSCH transmission channels in the MTRP transmission (i.e., PUSCH transmission channels between the terminal and different TRPs). The N PHRs are respectively used to report related power information of the PUSCH transmission channels corresponding respectively to the N PHRs. Furthermore, when the PUSCH transmission scheme is the aforementioned MTRP transmission and the MTRP transmission meets the PHR timeline requirement, it means that each TRP communicates with the terminal, and the PHR corresponding to the PUSCH transmission channel between each TRP and the terminal meets the PHR timeline requirement. Therefore, it can be determined that the N PHRs are all actual PHRs.

Optionally, in some embodiments, the PHRs may be type 1 PHRs. Optionally, it may be that when a higher layer triggers and uses type 1 PHR reporting, the terminal determines whether a PHR is an actual PHR or a virtual PHR.

Step 2102: measuring the N actual PHRs.

Detailed introduction regarding measuring actual PHRs can refer to existing methods and will not be repeated here.

Step 2103: reporting the N actual PHRs to the network device.

The reporting method involved in this embodiment of the present disclosure may include at least one of steps S2101 to S2103. For example, step S2101 can be implemented as an independent embodiment, step S2102 can be implemented as an independent embodiment, step S2103 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

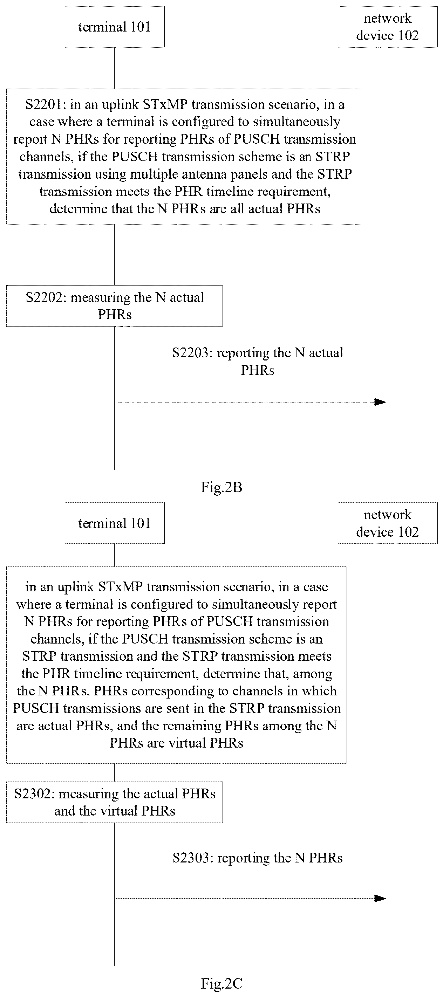

FIG. 2B is a schematic interaction diagram of a reporting method according to an embodiment of the present disclosure. As shown in FIG. 2B, this embodiment of the present disclosure relates to a reporting method, applied to a communication system 100. The method includes:

Step 2201: in an uplink STxMP transmission scenario, in a case where a terminal is configured to simultaneously report N PHRs for reporting PHRs of PUSCH transmission channels, if the PUSCH transmission scheme is an STRP transmission using multiple antenna panels and the STRP transmission meets the PHR timeline requirement, determine that the N PHRs are all actual PHRs, where N is an integer greater than or equal to 2.

Detailed introduction regarding the "uplink STxMP transmission scenario, N PHRs" can refer to the above embodiment descriptions.

It should be noted that in this embodiment of the present disclosure, the terminal includes two antenna panels as an example, but is not limited thereto. Also, when the terminal includes two antenna panels, if the PUSCH transmission scheme is STRP transmission using multiple antenna panels, it means that each antenna panel of the terminal communicates with TRPs.

Optionally, in some embodiments, when the PUSCH transmission scheme is the aforementioned STRP transmission using multiple antenna panels, the value of N may be the same as the number of channels in which PUSCH transmissions are sent using the multiple antenna panels (i.e., the value of N may be the same as the number of antenna panels). Different PHRs correspond to PUSCH transmission channels of different antenna panels (i.e., PUSCH transmission channels between different antenna panels and TRPs). The N PHRs are respectively used to report related power information of the PUSCH transmission channels corresponding respectively to the N PHRs.

Furthermore, optionally, in some embodiments, when the PUSCH transmission scheme is the aforementioned STRP transmission using multiple antenna panels and the STRP transmission meets the PHR timeline requirement, it means that each antenna panel of the terminal communicates with the terminal, and the PHR corresponding to the PUSCH transmission channel between each antenna panel and the terminal meets the PHR timeline requirement. Therefore, it can be determined that the N PHRs are all actual PHRs.

Step 2202: measuring the N actual PHRs.

Step 2203: reporting the N actual PHRs to the network device.

Detailed introduction regarding steps 2201-2203 can refer to the above embodiments.

The reporting method involved in this embodiment of the present disclosure may include at least one of steps S2201 to S2203. For example, step S2201 can be implemented as an independent embodiment, step S2202 can be implemented as an independent embodiment, step S2203 can be implemented as an independent embodiment, step S2201+S2202 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 2C is a schematic interaction diagram of a reporting method according to an embodiment of the present disclosure. As shown in FIG. 2C, this embodiment of the present disclosure relates to a reporting method, applied to a communication system 100. The method includes:

Step 2301: in an uplink STxMP transmission scenario, in a case where a terminal is configured to simultaneously report N PHRs for reporting PHRs of PUSCH transmission channels, if the PUSCH transmission scheme is an STRP transmission and the STRP transmission meets the PHR timeline requirement, determine that, among the N PHRs, PHRs corresponding to channels in which PUSCH transmissions are sent in the STRP transmission are actual PHRs, and the remaining PHRs among the N PHRs are virtual PHRs, where N is an integer greater than or equal to 2.

Detailed introduction regarding the "uplink STxMP transmission scenario, N PHRs" can refer to the above embodiment descriptions.

Optionally, in some embodiments, when the PUSCH transmission scheme is the aforementioned STRP transmission and the STRP transmission meets the PHR timeline requirement, the value of N may be the same as the number of TRPs in the STxMP transmission scenario. Different PHRs correspond to different TRPs. The PHRs are used to report related power information of the PUSCH transmission channels corresponding to the TRPs. Furthermore, when the PUSCH transmission scheme is the aforementioned STRP transmission and the STRP transmission meets the PHR timeline requirement, it means that only some TRPs communicate with the terminal, while another part of the TRPs do not communicate with the terminal. Moreover, the PHRs corresponding to the PUSCH channels of the TRPs communicating with the terminal meet the PHR timeline requirement. Therefore, it can be determined that, among the N PHRs, the PHRs corresponding to the channels in which PUSCH transmissions are sent in the STRP transmission are actual PHRs, and the remaining PHRs among the N PHRs are virtual PHRs. That is: the PHRs corresponding to the PUSCH channels of the TRPs communicating with the terminal are determined as actual PHRs, and the PHRs corresponding to the PUSCH channels of the TRPs not communicating with the terminal are determined as virtual PHRs. The actual PHRs can be used to report related power information of the PUSCH transmission channels corresponding to the actual PHRs; the virtual PHRs can be used to report related power information of the PUSCH transmission channels corresponding respectively to the virtual PHRs.

Step 2302: measuring the actual PHRs and the virtual PHRs.

Optionally, in some embodiments, detailed introduction regarding measuring actual PHRs can refer to existing methods and will not be repeated here.

Optionally, in some embodiments, the method for measuring the virtual PHRs among the N PHRs may include any of the following:

First method: when the PUSCH transmission in the STRP transmission is at least one of a Dynamic Grant Physical Uplink Shared Channel (DG PUSCH) or a Configured Grant Physical Uplink Shared Channel Type 2 (CG PUSCH Type 2), measure the virtual PHRs based on at least part of first parameters configured by a network device for the STRP transmission.

Optionally, in some embodiments, the first parameters may be used to implement the PUSCH transmission in the STRP transmission (i.e., the actually sent PUSCH transmission in the STRP transmission). The first parameters may be pre-configured. Optionally, in some embodiments, the network device typically configures transmission parameters for each PUSCH transmission channel in the STxMP scenario. These transmission parameters are used to implement PUSCH transmissions. When the terminal has an actual PUSCH transmission in a certain PUSCH transmission channel, it can directly transmit based on the transmission parameters corresponding to that PUSCH transmission channel. Optionally, the aforementioned first parameters are the pre-configured transmission parameters for the PUSCH transmission channel in the STRP transmission.

Optionally, the at least part of the first parameters may include at least one of:
Modulation and Coding Scheme (MCS);
Resource Block (RB) allocation.
Second method: when the PUSCH transmission in the STRP transmission is a CG PUSCH Type 1, measure the virtual PHRs based on second parameters configured by a network device for the PUSCH transmission channels corresponding respectively to the virtual PHRs.

Optionally, the second parameters are used to implement PUSCH transmissions in the PUSCH transmission channels corresponding respectively to the virtual PHRs. The second parameters may be pre-configured. Optionally, the aforementioned second parameters are the pre-configured transmission parameters for the PUSCH transmission channels corresponding respectively to the virtual PHRs.

Optionally, in some embodiments, the virtual PHRs may also include the maximum transmit power Pcmax corresponding to the TRP, or antenna panel, or TCI state, or SRS resource set corresponding to those virtual PHRs. Optionally, the maximum transmit power may be calculated based on at least one of Maximum Power Reduction (MPR), Additional Maximum Power Reduction (A-MPR), or Power Management Maximum Power Reduction (P-MPR).

Step 2303: reporting the N PHRs to the network device.

The reporting method involved in this embodiment of the present disclosure may include at least one of steps S2301 to S2303. For example, step S2301 can be implemented as an independent embodiment, step S2302 can be implemented as an independent embodiment, step S2303 can be implemented as an independent embodiment, step S2301+S2302 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

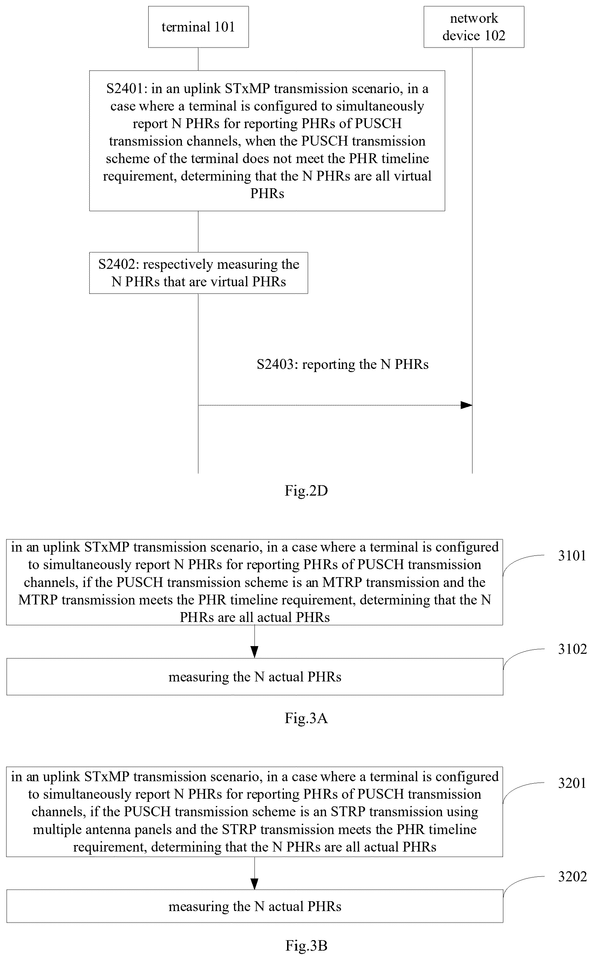

FIG. 2D is a schematic interaction diagram of a reporting method according to an embodiment of the present disclosure. As shown in FIG. 2D, this embodiment of the present disclosure relates to a reporting method, applied to a communication system 100. The method includes:

Step 2401: in an uplink STxMP transmission scenario, in a case where a terminal is configured to simultaneously report N PHRs for reporting PHRs of PUSCH transmission channels, when the PUSCH transmission scheme of the terminal does not meet the PHR timeline requirement, determining that the N PHRs are all virtual PHRs, where N is an integer greater than or equal to 2.

Optionally, in the embodiment of FIG. 2D, the value of N is the same as the number of TRPs in the STxMP transmission scenario. Different PHRs correspond to PUSCH transmission channels of different TRPs. The N PHRs are respectively used to report related power information of the PUSCH transmission channels corresponding respectively to the N PHRs.

Optionally, the "PUSCH transmission scheme of the terminal does not meet the PHR timeline requirement" may include at least one of:
the PUSCH transmission scheme of the terminal is STRP transmission, but this STRP transmission does not meet the PHR timeline requirement;
the PUSCH transmission scheme of the terminal is MTRP transmission, but this MTRP transmission does not meet the PHR timeline requirement;
the PUSCH transmission scheme of the terminal is no transmission.

Step 2402: respectively measuring the N PHRs that are virtual PHRs.

Optionally, in some embodiments, the aforementioned respectively measuring the N PHRs that are virtual PHRs may include:
when the PUSCH transmission configured in the STxMP transmission scenario is a CG PUSCH type 1 or includes a CG PUSCH type 1, measure the virtual PHRs based on third parameters configured for the PUSCH transmission channels respectively corresponding to the virtual PHRs.

Optionally, in some embodiments, the network device may pre-configure the transmission type for each PUSCH transmission channel in the STxMP transmission scenario for the terminal. Furthermore, when there is an actual PUSCH transmission in a certain PUSCH transmission channel, it may transmit based on the pre-configured transmission type of that PUSCH transmission channel.

Based on this, optionally, the aforementioned "the PUSCH transmission configured in the STxMP transmission scenario is a CG PUSCH type 1" may include: an STRP transmission is configured in the STxMP transmission scenario, and the pre-configured transmission type of the PUSCH transmission in this STRP transmission is CG PUSCH type 1. The aforementioned "the PUSCH transmission configured in the STxMP transmission scenario includes a CG PUSCH type 1" may include: an STRP transmission is configured in the STxMP transmission scenario, and the pre-configured transmission type of the PUSCH transmission in this STRP transmission is CG PUSCH type 1; or, an MTRP transmission is configured in the STxMP transmission scenario, and the pre-configured transmission type of one or more PUSCH transmissions in this MTRP transmission is CG PUSCH type 1.

Optionally, the aforementioned third parameters are used to implement CG PUSCH transmissions in the PUSCH transmission channels corresponding respectively to the virtual PHRs. The third parameters may be pre-configured. Optionally, the aforementioned third parameters are the pre-configured transmission parameters for the PUSCH transmission channels corresponding respectively to the virtual PHRs. Detailed introduction regarding transmission parameters can refer to the above embodiment descriptions.

Optionally, in some embodiments, the virtual PHRs may also include the maximum transmit power Pcmax corresponding to the TRP, or antenna panel, or TCI state, or SRS resource set corresponding to those virtual PHRs. Optionally, the maximum transmit power may be calculated based on at least one of MPR, A-MPR, or P-MPR.

Step 2403: reporting the N PHRs to the network device.

The reporting method involved in this embodiment of the present disclosure may include at least one of steps S2401 to S2403. For example, step S2401 can be implemented as an independent embodiment, step S2402 can be implemented as an independent embodiment, step S2403 can be implemented as an independent embodiment, step S2401+S2402 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 3A is a schematic interaction diagram of a reporting method according to an embodiment of the present disclosure. As shown in FIG. 3A, this embodiment of the present disclosure relates to a reporting method, applied to a terminal 101. The method includes:

Step 3101: in an uplink STxMP transmission scenario, in a case where a terminal is configured to simultaneously report N PHRs for reporting PHRs of PUSCH transmission channels, if the PUSCH transmission scheme is an MTRP transmission and the MTRP transmission meets the PHR timeline requirement, determining that the N PHRs are all actual PHRs.

Step 3102: measuring the N actual PHRs.

Detailed introduction regarding steps 3101-3102 can refer to the above embodiment descriptions.

The reporting method involved in this embodiment of the present disclosure may include at least one of steps S3101 to S3102. For example, step S3101 can be implemented as an independent embodiment, step S3102 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 3B is a schematic interaction diagram of a reporting method according to an embodiment of the present disclosure. As shown in FIG. 3B, this embodiment of the present disclosure relates to a reporting method, applied to a terminal 101. The method includes:

Step 3201: in an uplink STxMP transmission scenario, in a case where a terminal is configured to simultaneously report N PHRs for reporting PHRs of PUSCH transmission channels, if the PUSCH transmission scheme is an STRP transmission using multiple antenna panels and the STRP transmission meets the PHR timeline requirement, determining that the N PHRs are all actual PHRs.

Step 3202: measuring the N actual PHRs.

Detailed introduction regarding steps 3201-3202 can refer to the above embodiment descriptions.

The reporting method involved in this embodiment of the present disclosure may include at least one of steps S3201 to S3202. For example, step S3201 can be implemented as an independent embodiment, step S3202 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

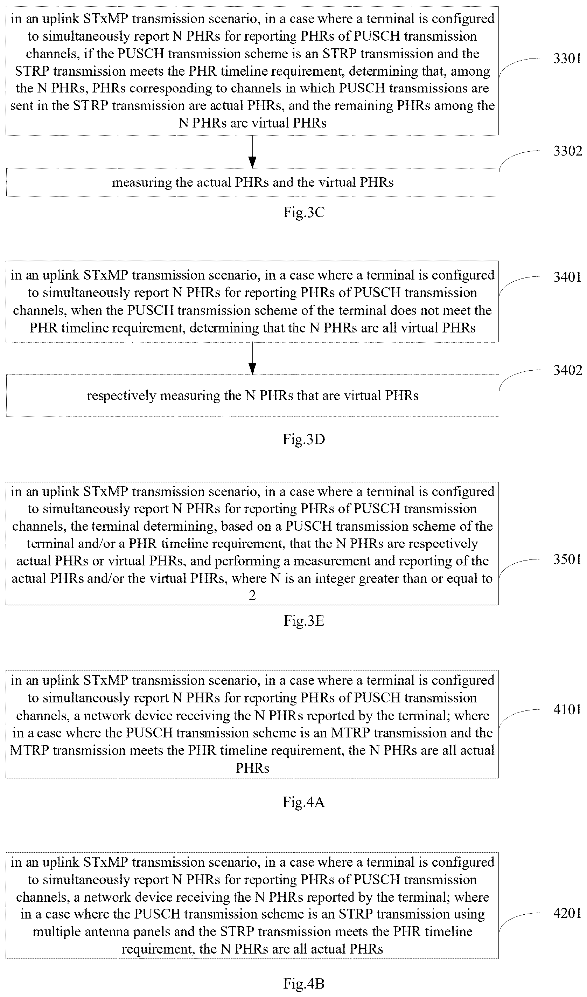

FIG. 3C is a schematic interaction diagram of a reporting method according to an embodiment of the present disclosure. As shown in FIG. 3C, this embodiment of the present disclosure relates to a reporting method, applied to a terminal 101. The method includes:

Step 3301: in an uplink STxMP transmission scenario, in a case where a terminal is configured to simultaneously report N PHRs for reporting PHRs of PUSCH transmission channels, if the PUSCH transmission scheme is an STRP transmission and the STRP transmission meets the PHR timeline requirement, determining that, among the N PHRs, PHRs corresponding to channels in which PUSCH transmissions are sent in the STRP transmission are actual PHRs, and the remaining PHRs among the N PHRs are virtual PHRs, where N is an integer greater than or equal to 2.

Step 3302: measuring the actual PHRs and the virtual PHRs.

Detailed introduction regarding steps 3301-3302 can refer to the above embodiment descriptions.

The reporting method involved in this embodiment of the present disclosure may include at least one of steps S3301 to S3302. For example, step S3301 can be implemented as an independent embodiment, step S3302 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 3D is a schematic interaction diagram of a reporting method according to an embodiment of the present disclosure. As shown in FIG. 3D, this embodiment of the present disclosure relates to a reporting method, applied to a terminal 101. The method includes:

Step 3401: in an uplink STxMP transmission scenario, in a case where a terminal is configured to simultaneously report N PHRs for reporting PHRs of PUSCH transmission channels, when the PUSCH transmission scheme of the terminal does not meet the PHR timeline requirement, determining that the N PHRs are all virtual PHRs.

Step 3402: respectively measuring the N PHRs that are virtual PHRs.

Detailed introduction regarding steps 3401-3402 can refer to the above embodiment descriptions.

The reporting method involved in this embodiment of the present disclosure may include at least one of steps S3401 to S3402. For example, step S3401 can be implemented as an independent embodiment, step S3402 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 3E is a schematic interaction diagram of a reporting method according to an embodiment of the present disclosure. As shown in FIG. 3E, this embodiment of the present disclosure relates to a reporting method, applied to a terminal 101. The method includes:

Step 3501: in an uplink simultaneous transmission across multiple panels (STxMP) transmission scenario, in a case where a terminal is configured to simultaneously report N Power Headroom Reports (PHRs) for reporting PHRs of Physical Uplink Shared Channel (PUSCH) transmission channels, the terminal determining, based on a PUSCH transmission scheme of the terminal and/or a PHR timeline requirement, that the N PHRs are respectively actual PHRs or virtual PHRs, and performing a measurement and reporting of the actual PHRs and/or the virtual PHRs, where N is an integer greater than or equal to 2.

Optionally, the STxMP transmission scenario includes multiple Transmission Reception Points (TRPs);
the transmission scheme includes at least one of: performing a Multi-Transmission Reception Point (MTRP) transmission in the STxMP transmission scenario, and performing a Single Transmission Reception Point (STRP) transmission in the STxMP transmission scenario.

Optionally, the N PHRs correspond respectively to the PUSCH transmission channels of different antenna panels, or different TCI states, or different SRS resource sets, or different TRPs; the N PHRs are respectively used to report related power information of the PUSCH transmission channels corresponding respectively to the N PHRs.

Optionally, the PHR timeline requirement includes:
a PUSCH transmission carrying data and a PUSCH transmission carrying a PHR being configured to be sent in a same time domain unit.

Optionally, the terminal determining, based on the PUSCH transmission scheme of the terminal and/or the PHR timeline requirement, that the N PHRs are respectively actual PHRs or virtual PHRs includes:
in a case where the PUSCH transmission scheme is an MTRP transmission and the MTRP transmission meets the PHR timeline requirement, determining that the N PHRs are all actual PHRs; where a value of N is the same as a quantity of channels in which PUSCH transmissions are sent in the MTRP transmission, different PHRs correspond to different PUSCH transmission channels in the MTRP transmission, and the N PHRs are respectively used to report related power information of the PUSCH transmission channels corresponding respectively to the N PHRs.

Optionally, the terminal determining, based on the PUSCH transmission scheme of the terminal and/or the PHR timeline requirement, that the N PHRs are respectively actual PHRs or virtual PHRs includes:
in a case where the PUSCH transmission scheme is a Single Transmission Reception Point (STRP) transmission using multiple antenna panels and the STRP transmission meets the PHR timeline requirement, determining that the N PHRs are all actual PHRs; where a value of N is the same as a quantity of channels in which PUSCH transmissions are sent using the multiple antenna panels, different PHRs correspond to PUSCH transmission channels of different antenna panels, and the N PHRs are respectively used to report related power information of the PUSCH transmission channels corresponding respectively to the N PHRs.

Optionally, the terminal determining, based on the PUSCH transmission scheme of the terminal and/or the PHR timeline requirement, that the N PHRs are respectively actual PHRs or virtual PHRs includes:
in a case where the PUSCH transmission scheme is an STRP transmission and the STRP transmission meets the PHR timeline requirement, determining that, among the N PHRs, PHRs corresponding to channels in which PUSCH transmissions are sent in the STRP transmission are actual PHRs, and the remaining PHRs among the N PHRs are virtual PHRs; where the actual PHRs are used to report related power information of the PUSCH transmission channels corresponding to the actual PHRs; and the virtual PHRs are used to report related power information of the PUSCH transmission channels corresponding respectively to the virtual PHRs.

Optionally, the terminal determining, based on the PUSCH transmission scheme of the terminal and/or the PHR timeline requirement, that the N PHRs are respectively actual PHRs or virtual PHRs includes:
in a case where the PUSCH transmission scheme of the terminal does not meet the PHR timeline requirement, determining that the N PHRs are all virtual PHRs; where a value of N is the same as a quantity of TRPs in the STxMP transmission scenario, different PHRs correspond to PUSCH transmission channels of different TRPs, and the N PHRs are respectively used to report related power information of the PUSCH transmission channels corresponding respectively to the N PHRs.

Optionally, the method further includes:
measuring the virtual PHRs.

Optionally, measuring the virtual PHRs includes at least one of:
when the PUSCH transmission in the STRP transmission is at least one of a Dynamic Grant Physical Uplink Shared Channel (DG PUSCH) or a Configured Grant Physical Uplink Shared Channel Type 2 (CG PUSCH Type 2), measuring the virtual PHRs based on at least part of first parameters configured by a network device for the STRP transmission, where the first parameters are used to implement the PUSCH transmission in the STRP transmission;
when the PUSCH transmission in the STRP transmission is a CG PUSCH Type 1, measuring the virtual PHRs based on second parameters configured by a network device for the PUSCH transmission channels corresponding respectively to the virtual PHRs, where the second parameters are used to implement PUSCH transmissions in the PUSCH transmission channels corresponding respectively to the virtual PHRs.

Optionally, the at least part of the first parameters includes at least one of:
a Modulation and Coding Scheme (MCS);
a Resource Block (RB) allocation.

Optionally, the method further includes:
respectively measuring the N PHRs that are virtual PHRs.

Optionally, respectively measuring the N PHRs that are virtual PHRs includes:
when the PUSCH transmission configured in the STxMP transmission scenario is a CG PUSCH type 1 or includes a CG PUSCH type 1, measuring the virtual PHRs based on third parameters configured for the PUSCH transmission channels respectively corresponding to the virtual PHRs, where the third parameters are used to implement CG PUSCH transmissions in the PUSCH transmission channels corresponding respectively to the virtual PHRs.

Optionally, the virtual PHRs reported by the terminal include maximum transmit powers (Pcmax) respectively corresponding to different TRPs, or different antenna panels, or different TCI states, or different SRS resource sets; where the maximum transmit powers are calculated based on at least one of a Maximum Power Reduction (MPR), an Additional Maximum Power Reduction (A-MPR), or a Power Management Maximum Power Reduction (P-MPR).

Optionally, the PHRs are type 1 PHRs.

Detailed introduction regarding step 3501 can refer to the above embodiment descriptions.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 4A is a schematic interaction diagram of a reporting method according to an embodiment of the present disclosure. As shown in FIG. 4A, this embodiment of the present disclosure relates to a reporting method, applied to a network device 102. The method includes:

Step 4101: in an uplink STxMP transmission scenario, in a case where a terminal is configured to simultaneously report N PHRs for reporting PHRs of PUSCH transmission channels, a network device receiving the N PHRs reported by the terminal; where in a case where the PUSCH transmission scheme is an MTRP transmission and the MTRP transmission meets the PHR timeline requirement, the N PHRs are all actual PHRs.

Detailed introduction regarding step 4101 can refer to the above embodiment descriptions.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 4B is a schematic interaction diagram of a reporting method according to an embodiment of the present disclosure. As shown in FIG. 4B, this embodiment of the present disclosure relates to a reporting method, applied to a network device 102. The method includes:
Step 4201: in an uplink STxMP transmission scenario, in a case where a terminal is configured to simultaneously report N PHRs for reporting PHRs of PUSCH transmission channels, a network device receiving the N PHRs reported by the terminal; where in a case where the PUSCH transmission scheme is a Single Transmission Reception Point (STRP) transmission using multiple antenna panels and the STRP transmission meets the PHR timeline requirement, the N PHRs are all actual PHRs.

Detailed introduction regarding step 4201 can refer to the above embodiment descriptions.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

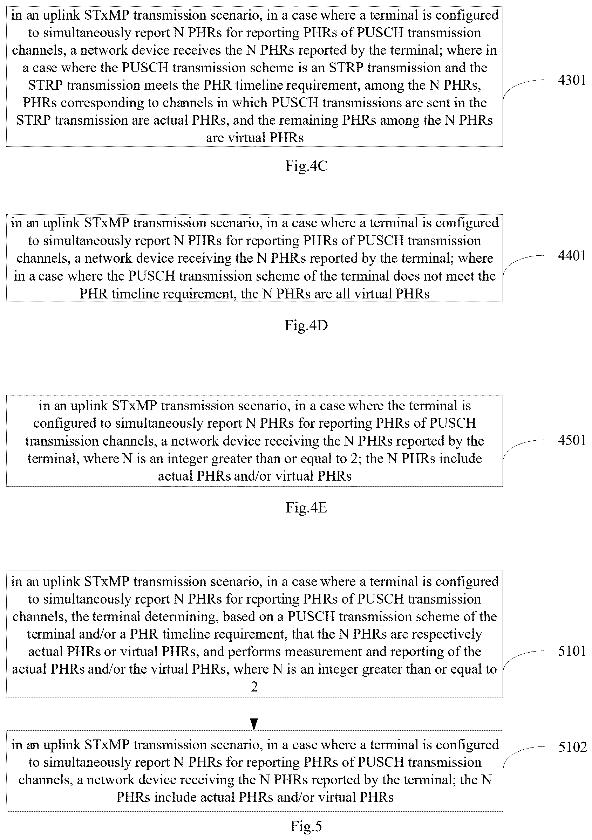

FIG. 4C is a schematic interaction diagram of a reporting method according to an embodiment of the present disclosure. As shown in FIG. 4C, this embodiment of the present disclosure relates to a reporting method, applied to a network device 102. The method includes:
Step 4301: in an uplink STxMP transmission scenario, in a case where a terminal is configured to simultaneously report N PHRs for reporting PHRs of PUSCH transmission channels, a network device receives the N PHRs reported by the terminal; where in a case where the PUSCH transmission scheme is an STRP transmission and the STRP transmission meets the PHR timeline requirement, among the N PHRs, PHRs corresponding to channels in which PUSCH transmissions are sent in the STRP transmission are actual PHRs, and the remaining PHRs among the N PHRs are virtual PHRs.

Detailed introduction regarding step 4301 can refer to the above embodiment descriptions.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 4D is a schematic interaction diagram of a reporting method according to an embodiment of the present disclosure. As shown in FIG. 4D, this embodiment of the present disclosure relates to a reporting method, applied to a network device 102. The method includes:

Step 4401: in an uplink STxMP transmission scenario, in a case where a terminal is configured to simultaneously report N PHRs for reporting PHRs of PUSCH transmission channels, a network device receiving the N PHRs reported by the terminal; where in a case where the PUSCH transmission scheme of the terminal does not meet the PHR timeline requirement, the N PHRs are all virtual PHRs.

Detailed introduction regarding step 4401 can refer to the above embodiment descriptions.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 4E is a schematic interaction diagram of a reporting method according to an embodiment of the present disclosure. As shown in FIG. 4E, this embodiment of the present disclosure relates to a reporting method, applied to a network device 102. The method includes:

Step 4501: in an uplink STxMP transmission scenario, in a case where the terminal is configured to simultaneously report N PHRs for reporting PHRs of PUSCH transmission channels, a network device receiving the N PHRs reported by the terminal, where N is an integer greater than or equal to 2; the N PHRs include actual PHRs and/or virtual PHRs.

Optionally, the STxMP transmission scenario includes multiple Transmission Reception Points (TRPs);
the transmission scheme includes at least one of: performing a Multi-Transmission Reception Point (MTRP) transmission in the STxMP transmission scenario, and performing a Single Transmission Reception Point (STRP) transmission in the STxMP transmission scenario.

Optionally, the N PHRs correspond respectively to the PUSCH transmission channels of different antenna panels, or different TCI states, or different SRS resource sets, or different TRPs; the N PHRs are respectively used to report related power information of the PUSCH transmission channels corresponding respectively to the N PHRs.

Optionally, the PHR timeline requirement includes:
a PUSCH carrying data and a PUSCH carrying a PHR being configured to be sent in a same time domain unit.

Optionally, in a case where the PUSCH transmission scheme is an MTRP transmission and the MTRP transmission meets the PHR timeline requirement, the N PHRs are all actual PHRs; where a value of N is the same as a quantity of channels in which PUSCH transmissions are sent in the MTRP transmission, different PHRs correspond to different PUSCH transmission channels in the MTRP transmission, and the N PHRs are respectively used to report related power information of the PUSCH transmission channels corresponding respectively to the N PHRs.

Optionally, in a case where the PUSCH transmission scheme is a Single Transmission Reception Point (STRP) transmission using multiple antenna panels and the STRP transmission meets the PHR timeline requirement, the N PHRs are all actual PHRs; where a value of N is the same as a quantity of channels in which PUSCH transmissions are sent using the multiple antenna panels, different PHRs correspond to PUSCH transmission channels of different antenna panels, and the N PHRs are respectively used to report related power information of the PUSCH transmission channels corresponding respectively to the N PHRs.

Optionally, in a case where the PUSCH transmission scheme is an STRP transmission and the STRP transmission meets the PHR timeline requirement, among the N PHRs, PHRs corresponding to channels in which PUSCH transmissions are sent in the STRP transmission are actual PHRs, and the remaining PHRs among the N PHRs are virtual PHRs; where the actual PHRs are used to report related power information of the PUSCH transmission channels corresponding to the actual PHRs; and the virtual PHRs are used to report related power information of the PUSCH transmission channels corresponding respectively to the virtual PHRs.

Optionally, in a case where the PUSCH transmission scheme of the terminal does not meet the PHR timeline requirement, the N PHRs are all virtual PHRs; where a value of N is the same as a quantity of TRPs in the STxMP transmission scenario, different PHRs correspond to PUSCH transmission channels of different TRPs, and the N PHRs are respectively used to report related power information of the PUSCH transmission channels corresponding respectively to the N PHRs.

Optionally, when the PUSCH transmission in the STRP transmission is at least one of a Dynamic Grant Physical Uplink Shared Channel (DG PUSCH) or a Configured Grant Physical Uplink Shared Channel Type 2 (CG PUSCH Type 2), the virtual PHRs are measured based on at least part of first parameters configured by the network device for the STRP transmission, where the first parameters are used to implement the PUSCH transmission in the STRP transmission;

when the PUSCH transmission in the STRP transmission is a CG PUSCH Type 1, the virtual PHRs are measured based on second parameters configured by the network device for the PUSCH transmission channels corresponding respectively to the virtual PHRs, where the second parameters are used to implement PUSCH transmissions in the PUSCH transmission channels corresponding respectively to the virtual PHRs.

Optionally, the at least part of the first parameters includes at least one of:
MCS;
RB allocation.

Optionally, when the PUSCH transmission configured in the STxMP transmission scenario is a CG PUSCH type 1 or includes a CG PUSCH type 1, the virtual PHRs are measured based on third parameters configured for the PUSCH transmission channels respectively corresponding to the virtual PHRs, where the third parameters are used to implement CG PUSCH transmissions in the PUSCH transmission channels corresponding respectively to the virtual PHRs.

Optionally, the virtual PHRs reported by the terminal include maximum transmit powers (Pcmax) respectively corresponding to different TRPs, or different antenna panels, or different TCI states, or different SRS resource sets; where the maximum transmit powers are calculated based on at least one of a Maximum Power Reduction (MPR), an Additional Maximum Power Reduction (A-MPR), or a Power Management Maximum Power Reduction (P-MPR).

Optionally, the PHRs are type 1 PHRs.

Detailed introduction regarding step 4501 can refer to the above embodiment descriptions.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

FIG. 5 is a schematic flowchart of a reporting method according to an embodiment of the present disclosure. As shown in FIG. 5, this embodiment of the present disclosure relates to a reporting method, applied to a communication system. The method includes at least one of:

Step 5101: in an uplink STxMP transmission scenario, in a case where a terminal is configured to simultaneously report N PHRs for reporting PHRs of PUSCH transmission channels, the terminal determining, based on a PUSCH transmission scheme of the terminal and/or a PHR timeline requirement, that the N PHRs are respectively actual PHRs or virtual PHRs, and performs measurement and reporting of the actual PHRs and/or the virtual PHRs, where N is an integer greater than or equal to 2.

Step 5102: in an uplink STxMP transmission scenario, in a case where a terminal is configured to simultaneously report N PHRs for reporting PHRs of PUSCH transmission channels, a network device receiving the N PHRs reported by the terminal; the N PHRs include actual PHRs and/or virtual PHRs.

Optional implementations of steps 5101-5102 can be seen in the above embodiment descriptions.

In some embodiments, the above method may include the methods of the embodiments described from the perspective of the communication system side, terminal side, network device side, etc., which are not repeated here.

The reporting method involved in this embodiment of the present disclosure may include at least one of steps S5101 to S5102. For example, step S5101 can be implemented as an independent embodiment, step S5102 can be implemented as an independent embodiment, but is not limited thereto.

In this embodiment or implementation, provided there is no contradiction, each step can be independent, arbitrarily combined, or exchanged in order. Optional methods or examples can be arbitrarily combined and can be arbitrarily combined with any steps from other implementations or embodiments.

The following is an exemplary description of the above methods.

The present disclosure is used to solve the method for determining the reference channel for PHR reporting in STxMP transmission. The specific method is as follows:
When a higher layer triggers and uses type 1 PHR reporting, under the condition that the timeline processing requirements for PHR calculation are met:
When the base station configures the terminal to report 2 PHRs, for S-DCI based STxMP transmission:
Case 1: When the first PHR is an actual PHR, corresponding to MTRP transmission, then the second PHR is also an actual PHR.
Case 2: When the first PHR is an actual PHR, corresponding to multi-panel/STRP transmission, then the second PHR is also an actual PHR.
Case 3: When the first PHR is an actual PHR, corresponding to STRP transmission, then the second PHR is a virtual PHR.
Case 4: When the first PHR is a virtual PHR, then the second PHR is also a virtual PHR.

When the base station configures the terminal to report 2 PHRs, for M-DCI based STxMP transmission, as in CASE1/3/4 above;
Corresponding to CASE3/4, it is necessary to use a reference PUSCH to calculate the virtual PHR, considering the following enhancements and applying at least one of them when calculating the PHR:
For CASE3:
   Alt.1: For DG PUSCH/CG PUSCH Type 2, use at least part of the parameters in the PUSCH parameters corresponding to the SRS resource set used to calculate the first PHR for the PHR calculation of the PUSCH associated with another SRS resource set, i.e., the reference channel uses the same MCS, RB allocation, etc.;
   Alt.2: For CG PUSCH type 1, use the already configured parameters corresponding to the PUSCH associated with another SRS resource set (S-DCI) / PUSCH (M-DCI) for the corresponding virtual PHR calculation;
For CASE4:
   Alt.3: For CG PUSCH type 1 (S-DCI) or a transmission scheme including CG PUSCH type 1 (M-DCI), use the already configured CG PUSCHs for the virtual PHR calculation respectively corresponding to the PUSCHs associated with different SRS resource sets;
For CASE3/4:
   Alt.4: When calculating virtual PHRs, consider the impact of MPR, A-MPR, P-MPR in all cases.

The present disclosure provides a PHR reporting method and an optimized scheme for determining the reference channel under STxMP transmission configuration, thereby enabling the network to obtain more meaningful PHR information, which is beneficial for improving system throughput.

The embodiments of the present disclosure also provides apparatuses for implementing any of the above methods. For example, an apparatus is provided that includes units or modules for performing each step executed by the terminal in any of the above methods. As another example, another apparatus is provided that includes units or modules for performing each step executed by a network device (e.g., an access network device, a core network function node, a core network device, etc.) in any of the above methods.

It should be understood that the division of units or modules in the above apparatus is only a division of logical functions, which may be fully or partially integrated into one physical entity in actual implementation, or may be physically separate. In addition, the units or modules in the apparatus can be implemented in the form of software called by a processor. For example, the apparatus includes a processor connected to a memory. The memory stores instructions, and the processor calls the instructions stored in the memory to implement any of the above methods or to implement the functions of the units or modules in the above apparatus. The processor may be a general-purpose processor, such as a Central Processing Unit (CPU) or a microprocessor. The memory may be a memory inside the apparatus or an external memory. Alternatively, the units or modules in the apparatus can be implemented in the form of hardware circuits, and the functions of some or all units or modules can be realized through the design of hardware circuits. The hardware circuits can be understood as one or more processors. For example, in one implementation, the hardware circuit is an Application-Specific Integrated Circuit (ASIC), which implements the functions of some or all of the units or modules by designing the logical relationships of the components within the circuit. As another example, in another implementation, the hardware circuit can be implemented by a Programmable Logic Device (PLD). Taking a Field Programmable Gate Array (FPGA) as an example, it can include a large number of logic gate circuits. The connection relationships between the logic gate circuits are configured through configuration files to implement the functions of some or all of the units or modules. All units or modules in the above apparatus can be implemented entirely in the form of software called by a processor, or entirely in the form of hardware circuits, or partly in the form of software called by a processor and the remaining part in the form of hardware circuits.

In the embodiments of the present disclosure, a processor is a circuit capable of signal processing. In one implementation, the processor may be a circuit capable of reading and running instructions, such as a Central Processing Unit (CPU), a microprocessor, a Graphics Processing Unit (GPU) (which can be understood as a microprocessor), or a Digital Signal Processor (DSP). In another implementation, the processor may implement certain functions through the logical relationships of hardware circuits. The logical relationships of the hardware circuits are fixed or reconfigurable. For example, the processor is a hardware circuit implemented by an Application-Specific Integrated Circuit (ASIC) or a Programmable Logic Device (PLD), such as an FPGA. In a reconfigurable hardware circuit, the process of the processor loading configuration documents to implement hardware circuit configuration can be understood as the processor loading instructions to implement the functions of some or all of the units or modules. In addition, it may also be a hardware circuit designed for artificial intelligence, which can be understood as an ASIC, such as a Neural Network Processing Unit (NPU), a Tensor Processing Unit (TPU), a Deep learning Processing Unit (DPU), etc.

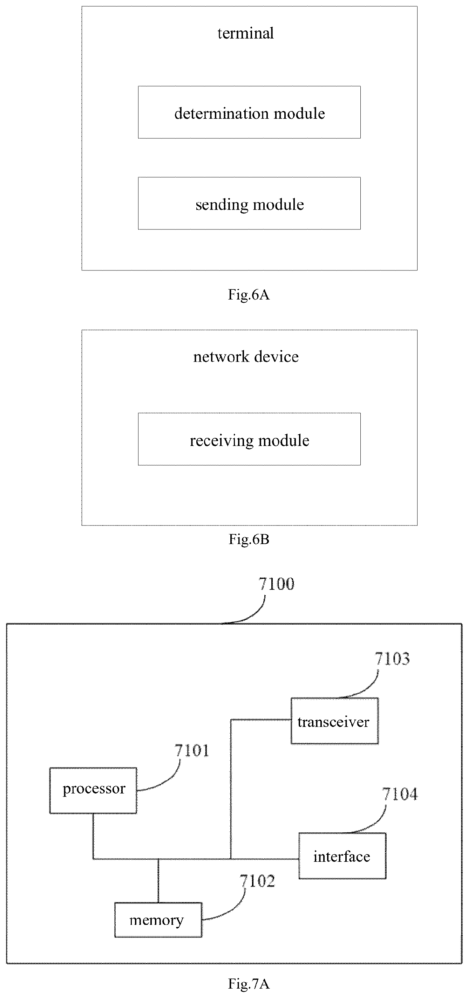

FIG. 6A is a schematic structural diagram of a terminal according to an embodiment of the present disclosure. As shown in FIG. 6A, it includes: a determination module, configured to, in an uplink simultaneous transmission across multiple panels (STxMP) transmission scenario, in a case where a terminal is configured to simultaneously report N Power Headroom Reports (PHRs) for reporting PHRs of Physical Uplink Shared Channel (PUSCH) transmission channels, determine, based on a PUSCH transmission scheme of the terminal and/or a PHR timeline requirement, that the N PHRs are respectively actual PHRs or virtual PHRs, where N is an integer greater than or equal to 2; a sending module, configured to perform measurement and reporting of the actual PHRs and/or the virtual PHRs. Optionally, the determination module is used to perform steps related to "determining" in any of the above methods, and the sending module is used to perform steps related to "sending" in any of the above methods. Optionally, it also includes a receiving module. The receiving module is used to perform steps related to receiving in any of the above methods, which will not be repeated here.

FIG. 6B is a schematic structural diagram of a network device according to an embodiment of the present disclosure. As shown in FIG. 6B, it includes: a receiving module, configured to, in an uplink STxMP transmission scenario, in a case where the terminal is configured to simultaneously report N PHRs for reporting PHRs of PUSCH transmission channels, receive the N PHRs reported by the terminal, where N is an integer greater than or equal to 2; the N PHRs include actual PHRs and/or virtual PHRs. Optionally, the receiving module is used to perform steps related to "receiving" in any of the above methods. Optionally, it also includes at least one of a determination module and a sending module. The determination module is used to perform steps related to "determining" in any of the above methods, and the sending module is used to perform steps related to sending in any of the above methods, which will not be repeated here.

FIG. 7A is a schematic structural diagram of a communication device 7100 according to an embodiment of the present disclosure. The communication device 7100 can be a network device (e.g., an access network device, a core network device, etc.), a terminal (e.g., a user equipment, etc.), a chip, chip system, or processor, etc., that supports a network device to implement any of the above methods, or a chip, chip system, or processor, etc., that supports a terminal to implement any of the above methods. The communication device 7100 can be used to implement the method described in the above method embodiments. For details, refer to the description in the above method embodiments.

As shown in FIG. 7A, the communication device 7100 includes one or more processors 7101. The processor 7101 can be a general-purpose processor or a dedicated processor, etc., such as a baseband processor or a central processor. The baseband processor can be used to process communication protocols and communication data. The central processor can be used to control the communication device (e.g., a base station, a baseband chip, a terminal device, a terminal device chip, a DU, or a CU, etc.), execute programs, and process program data. The processor 7101 is configured to invoke instructions to cause the communication device 7100 to perform any of the above methods.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. When the communication device 7100 includes one or more transceivers 7103, the communication steps such as sending and receiving in the above method are performed by the transceiver 7103, and other steps are performed by the processor 7101.

In some embodiments, the transceiver may include a receiver and a transmitter, which may be separate or integrated together. Optionally, terms such as transceiver, transceiver unit, transceiver machine, transceiver circuit, etc., can be used interchangeably. Terms such as transmitter, sending unit, sending machine, sending circuit, etc., can be used interchangeably. Terms such as receiver, receiving unit, receiving machine, receiving circuit, etc., can be used interchangeably.

Optionally, the communication device 7100 further includes one or more interface circuits 7104. The interface circuit 7104 is connected to the memory 7102. The interface circuit 7104 can be used to receive signals from the memory 7102 or other devices, and can be used to send signals to the memory 7102 or other devices. For example, the interface circuit 7104 can read instructions stored in the memory 7102 and send the instructions to the processor 7101.

The communication device 7100 described in the above embodiments can be a network device or a terminal, but the scope of the communication device 7100 described in the present disclosure is not limited to this. The structure of the communication device 7100 is not limited by FIG. 7A. The communication device can be an independent device or part of a larger device. For example, the communication device can be: 1) an independent Integrated Circuit (IC), or chip, or chip system or subsystem; 2) a set of one or more ICs. Optionally, the set of ICs may also include storage components for storing data and programs; 3) an ASIC, such as a Modem; 4) a module that can be embedded in other devices; 5) a receiver, terminal device, smart terminal device, cellular phone, wireless device, handset, mobile unit, vehicle-mounted device, network device, cloud device, artificial intelligence device, etc.; 6) others, etc.

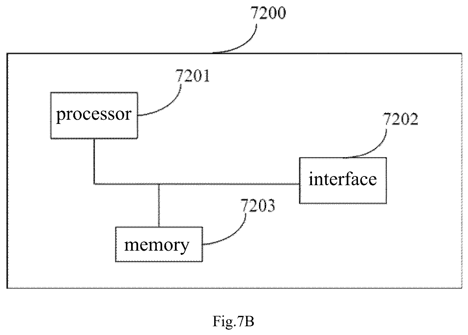

FIG. 7B is a schematic structural diagram of a chip 7200 according to an embodiment of the present disclosure. For the case where the communication device 7100 can be a chip or chip system, refer to the schematic structural diagram of the chip 7200 shown in FIG. 7B, but it is not limited to this.

The chip 7200 includes one or more processors 7201. The processor 7201 is configured to invoke instructions to cause the chip 7200 to perform any of the above methods.

In some embodiments, the chip 7200 further includes one or more interface circuits 7202. The interface circuit 7202 is connected to the memory 7203. The interface circuit 7202 can be used to receive signals from the memory 7203 or other devices, and can be used to send signals to the memory 7203 or other devices. For example, the interface circuit 7202 can read instructions stored in the memory 7203 and send the instructions to the processor 7201. Optionally, terms such as interface circuit, interface, transceiver pin, transceiver, etc., can be used interchangeably.

In some embodiments, the chip 7200 further includes one or more memories 7203 for storing instructions. Optionally, all or part of the memory 7203 may be located outside the chip 7200.

The present disclosure also proposes a storage medium. The storage medium stores instructions. When the instructions run on the communication device 7100, they cause the communication device 7100 to perform any of the above methods. Optionally, the storage medium is an electronic storage medium. Optionally, the storage medium is a computer-readable storage medium, but is not limited thereto. It may also be a storage medium readable by other devices. Optionally, the storage medium may be a non-transitory storage medium, but is not limited thereto. It may also be a transitory storage medium.

The present disclosure also proposes a program product. When the program product is executed by the communication device 7100, it causes the communication device 7100 to perform any of the above methods. Optionally, the program product is a computer program product.

The present disclosure also proposes a computer program that, when run on a computer, causes the computer to perform any of the above methods.

In the above embodiments, they may be implemented entirely or partially by software, hardware, firmware, or any combination thereof. When implemented using software, it may be implemented entirely or partially in the form of a computer program product. The computer program product includes one or more computer programs. When the computer programs are loaded and executed on a computer, all or part of the processes or functions described in the embodiments of the present disclosure are generated. The computer may be a general-purpose computer, a dedicated computer, a computer network, or other programmable devices. The computer programs may be stored in a computer-readable storage medium or transmitted from one computer-readable storage medium to another computer-readable storage medium. For example, the computer programs may be transmitted from a website, computer, server, or data center to another website, computer, server, or data center via wired (e.g., coaxial cable, optical fiber, Digital Subscriber Line (DSL)) or wireless (e.g., infrared, wireless, microwave, etc.) means. The computer-readable storage medium may be any available medium that can be accessed by a computer or a data storage device such as a server or data center integrated with one or more available media. The available medium may be a magnetic medium (e.g., floppy disk, hard disk, magnetic tape), an optical medium (e.g., high-density digital video disc (DVD)), or a semiconductor medium (e.g., Solid State Disk (SSD)), etc.

Those of ordinary skill in the art may realize that the units and algorithm steps of the examples described in combination with the embodiments disclosed herein can be implemented by electronic hardware, or a combination of computer software and electronic hardware. Whether these functions are performed by hardware or software depends on the specific application and design constraints of the technical solution. Professional technicians can use different methods for each specific application to implement the described functions, but such implementation should not be considered beyond the scope of the present disclosure.

Those skilled in the art can clearly understand that, for the convenience and conciseness of description, the specific working processes of the systems, apparatuses, and units described above can refer to the corresponding processes in the foregoing method embodiments and will not be repeated here.

The above are only specific implementations of the present disclosure, but the scope of protection of the present disclosure is not limited thereto. Any person skilled in the art can easily think of changes or substitutions within the technical scope disclosed in the present disclosure, which should be covered within the scope of the present disclosure. Therefore, the scope of the present disclosure shall be subject to the scope of the claims.

## Claims

1. A reporting method, comprising:
in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, determining by the terminal, based on a PUSCH transmission scheme of the terminal and/or a PHR timeline requirement, that the N PHRs are respectively actual PHRs or virtual PHRs, and performing a measurement and reporting of the actual PHRs and/or the virtual PHRs, wherein N is an integer greater than or equal to 2.

2. The method according to claim 1, wherein there exists a plurality of transmission reception points (TRPs) in the uplink STxMP transmission scenario;
the PUSCH transmission scheme comprises at least one of: performing a multi-transmission reception point (MTRP) transmission in the STxMP transmission scenario, or performing a single transmission reception point (STRP) transmission in the STxMP transmission scenario.

3. The method according to claim 1, wherein the N PHRs correspond respectively to the PUSCH transmission channels of different antenna panels, or different TCI states, or different SRS resource sets, or different TRPs, and the N PHRs are respectively used to report related power information of the PUSCH transmission channels corresponding respectively to the N PHRs.

4. The method according to any one of claims 1 to 3, wherein the PHR timeline requirement comprises:
a PUSCH transmission carrying data and a PUSCH transmission carrying a PHR being configured to be sent in a same time domain unit.

5. The method according to any one of claims 1 to 4, wherein determining by the terminal, based on the PUSCH transmission scheme of the terminal and/or the PHR timeline requirement, that the N PHRs are respectively the actual PHRs or the virtual PHRs comprises:
in a case where the PUSCH transmission scheme is an MTRP transmission and the MTRP transmission meets the PHR timeline requirement, determining that the N PHRs are all actual PHRs,
wherein a value of N is the same as a quantity of channels in which PUSCH transmissions are sent in the MTRP transmission, the N PHRs correspond respectively to different PUSCH transmission channels in the MTRP transmission, and the N PHRs are respectively used to report related power information of the PUSCH transmission channels corresponding respectively to the N PHRs.

6. The method according to any one of claims 1 to 4, wherein determining by the terminal, based on the PUSCH transmission scheme of the terminal and/or the PHR timeline requirement, that the N PHRs are respectively the actual PHRs or the virtual PHRs comprises:
in a case where the PUSCH transmission scheme is an STRP transmission using multiple antenna panels and the STRP transmission meets the PHR timeline requirement, determining that the N PHRs are all actual PHRs,
wherein a value of N is the same as a quantity of channels in which PUSCH transmissions are sent using the multiple antenna panels, the N PHRs correspond respectively to the PUSCH transmission channels of different antenna panels, and the N PHRs are respectively used to report related power information of the PUSCH transmission channels corresponding respectively to the N PHRs.

7. The method according to any one of claims 1 to 4, wherein determining by the terminal, based on the PUSCH transmission scheme of the terminal and/or the PHR timeline requirement that the N PHRs are respectively the actual PHRs or the virtual PHRs comprises:
in a case where the PUSCH transmission scheme is an STRP transmission and the STRP transmission meets the PHR timeline requirement, determining that, among the N PHRs, PHRs corresponding to channels in which PUSCH transmissions are sent in the STRP transmission are the actual PHRs, and remaining PHRs among the N PHRs are the virtual PHRs,
wherein the actual PHRs are used to report related power information of PUSCH transmission channels corresponding to the actual PHRs, and the virtual PHRs are used to report related power information of PUSCH transmission channels corresponding respectively to the virtual PHRs.

8. The method according to any one of claims 1 to 4, wherein determining by the terminal, based on the PUSCH transmission scheme of the terminal and/or the PHR timeline requirement, that the N PHRs are respectively the actual PHRs or the virtual PHRs comprises:
in a case where the PUSCH transmission scheme of the terminal does not meet the PHR timeline requirement, determining that the N PHRs are all virtual PHRs,
wherein a value of N is the same as a quantity of TRPs in the STxMP transmission scenario, the N PHRs respectively correspond to the PUSCH transmission channels of different TRPs, and the N PHRs are respectively used to report related power information of the PUSCH transmission channels corresponding respectively to the N PHRs.

9. The method according to claim 7, further comprising:
measuring the virtual PHRs.

10. The method according to claim 9, wherein measuring the virtual PHRs comprises at least one of:
in a case where the PUSCH transmission in the STRP transmission is at least one of a dynamic grant physical uplink shared channel (DG PUSCH) or a configured grant physical uplink shared channel type 2 (CG PUSCH Type 2), measuring the virtual PHRs based on at least part of first parameters configured by a network device for the STRP transmission, wherein the first parameters are used to implement the PUSCH transmission in the STRP transmission; or
in a case where the PUSCH transmission in the STRP transmission is a CG PUSCH Type 1, measuring the virtual PHRs based on second parameters configured by a network device for the PUSCH transmission channels corresponding respectively to the virtual PHRs respectively, wherein the second parameters are used to implement PUSCH transmissions in the PUSCH transmission channels corresponding respectively to the virtual PHRs.

11. The method according to claim 10, wherein the at least part of the first parameters comprises at least one of:
a modulation and coding scheme (MCS); or
a resource block (RB) allocation.

12. The method according to claim 8, further comprising:
respectively measuring the N PHRs that are virtual PHRs.

13. The method according to claim 12, wherein respectively measuring the N PHRs that are virtual PHRs comprises:
in a case where a PUSCH transmission configured in the STxMP transmission scenario is a CG PUSCH type 1 or comprises a CG PUSCH type 1, measuring the virtual PHRs based on third parameters configured for the PUSCH transmission channels respectively corresponding to the virtual PHRs, wherein the third parameters are used to implement CG PUSCH transmissions in the PUSCH transmission channels corresponding respectively to the virtual PHRs.

14. The method according to any one of claims 1 to 13, wherein the virtual PHRs reported by the terminal comprise maximum transmit powers (Pcmax) respectively corresponding to different TRPs, or different antenna panels, or different TCI states, or different SRS resource sets,
wherein the maximum transmit powers (Pcmax) are calculated based on at least one of a maximum power reduction (MPR), an additional maximum power reduction (A-MPR), or a power management maximum power reduction (P-MPR).

15. The method according to any one of claims 1 to 14, wherein the PHRs are type 1 PHRs.

16. A reporting method, comprising:
in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, receiving, by a network device, the N PHRs reported by the terminal, wherein N is an integer greater than or equal to 2, and the N PHRs comprise actual PHRs and/or virtual PHRs.

17. The method according to claim 16, wherein there exists a plurality of transmission reception points (TRPs) in the uplink STxMP transmission scenario;
the PUSCH transmission scheme comprises at least one of: performing a multi-transmission reception point (MTRP) transmission in the STxMP transmission scenario, or performing a single transmission reception point (STRP) transmission in the STxMP transmission scenario.

18. The method according to claim 16, wherein the N PHRs correspond respectively to the PUSCH transmission channels of different antenna panels, or different TCI states, or different SRS resource sets, or different TRPs, and the N PHRs are respectively used to report related power information of the PUSCH transmission channels corresponding respectively to the N PHRs.

19. The method according to any one of claims 16 to 18, wherein the PHR timeline requirement comprises:
a PUSCH carrying data and a PUSCH carrying a PHR being configured to be sent in a same time domain unit.

20. The method according to any one of claims 16 to 19, wherein in a case where the PUSCH transmission scheme is an MTRP transmission and the MTRP transmission meets the PHR timeline requirement, the N PHRs are all actual PHRs,
wherein a value of N is the same as a quantity of channels in which PUSCH transmissions are sent in the MTRP transmission, the N PHRs correspond respectively to different PUSCH transmission channels in the MTRP transmission, and the N PHRs are respectively used to report related power information of the PUSCH transmission channels corresponding respectively to the N PHRs.

21. The method according to any one of claims 16 to 19, wherein in a case where the PUSCH transmission scheme is an STRP transmission using multiple antenna panels and the STRP transmission meets the PHR timeline requirement, the N PHRs are all actual PHRs,
wherein a value of N is the same as a quantity of channels in which PUSCH transmissions are sent using the multiple antenna panels, the N PHRs correspond respectively to the PUSCH transmission channels of different antenna panels, and the N PHRs are respectively used to report related power information of the PUSCH transmission channels corresponding respectively to the N PHRs.

22. The method according to any one of claims 16 to 19, wherein in a case where the PUSCH transmission scheme is an STRP transmission and the STRP transmission meets the PHR timeline requirement, among the N PHRs, PHRs corresponding to channels in which PUSCH transmissions are sent in the STRP transmission are the actual PHRs, and remaining PHRs among the N PHRs are the virtual PHRs,
wherein the actual PHRs are used to report related power information of PUSCH transmission channels corresponding to the actual PHRs, and the virtual PHRs are used to report related power information of PUSCH transmission channels corresponding respectively to the virtual PHRs.

23. The method according to any one of claims 16 to 19, wherein in a case where the PUSCH transmission scheme of the terminal does not meet the PHR timeline requirement, the N PHRs are all virtual PHRs,
wherein a value of N is the same as a quantity of TRPs in the STxMP transmission scenario, the N PHRs respectively correspond to the PUSCH transmission channels of different TRPs, and the N PHRs are respectively used to report related power information of the PUSCH transmission channels corresponding respectively to the N PHRs.

24. The method according to claim 22, wherein
in a case where the PUSCH transmission in the STRP transmission is at least one of a dynamic grant physical uplink shared channel (DG PUSCH) or a configured grant physical uplink shared channel type 2 (CG PUSCH Type 2), the virtual PHRs are measured based on at least part of first parameters configured by the network device for the STRP transmission, wherein the first parameters are used to implement the PUSCH transmission in the STRP transmission; and
in a case where the PUSCH transmission in the STRP transmission is a CG PUSCH Type 1, the virtual PHRs are measured based on second parameters configured by the network device for the PUSCH transmission channels corresponding respectively to the virtual PHRs respectively, wherein the second parameters are used to implement PUSCH transmissions in the PUSCH transmission channels corresponding respectively to the virtual PHRs.

25. The method according to claim 24, wherein the at least part of the first parameters comprises at least one of:
a modulation and coding scheme (MCS); or
a resource block (RB) allocation.

26. The method according to claim 23, wherein in a case where a PUSCH transmission configured in the STxMP transmission scenario is a CG PUSCH type 1 or comprises a CG PUSCH type 1, the virtual PHRs are measured based on third parameters configured for the PUSCH transmission channels respectively corresponding to the virtual PHRs, wherein the third parameters are used to implement CG PUSCH transmissions in the PUSCH transmission channels corresponding respectively to the virtual PHRs.

27. The method according to any one of claims 16 to 26, wherein the virtual PHRs reported by the terminal comprise maximum transmit powers (Pcmax) respectively corresponding to different TRPs, or different antenna panels, or different TCI states, or different SRS resource sets,
wherein the maximum transmit powers (Pcmax) are calculated based on at least one of a maximum power reduction (MPR), an additional maximum power reduction (A-MPR), or a power management maximum power reduction (P-MPR).

28. The method according to any one of claims 16 to 27, wherein the PHRs are type 1 PHRs.

29. A reporting method, applied to a communication system, wherein the communication system comprises a terminal and a network device, the method comprising at least one of:
in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, determining by the terminal, based on a PUSCH transmission scheme of the terminal and/or a PHR timeline requirement, that the N PHRs are respectively actual PHRs or virtual PHRs, and performing a measurement and reporting of the actual PHRs and/or the virtual PHRs, wherein N is an integer greater than or equal to 2; or
in an STxMP transmission scenario, in a case where a terminal is configured to simultaneously report N PHRs for reporting PHRs of PUSCH transmission channels, receiving, by a network device, the N PHRs reported by the terminal, wherein the N PHRs comprise actual PHRs and/or virtual PHRs.

30. A terminal, comprising:
a determination module configured to, in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, determine, based on a PUSCH transmission scheme of the terminal and/or a PHR timeline requirement, that the N PHRs are respectively actual PHRs or virtual PHRs, wherein N is an integer greater than or equal to 2; and
a sending module, configured to perform a measurement and reporting of the actual PHRs and/or the virtual PHRs.

31. A network device, comprising:
a receiving module configured to, in an uplink simultaneous transmission across multiple panels (STxMP) transmission scenario, in a case where a terminal is configured to simultaneously report N power headroom reports (PHRs) for reporting PHRs of physical uplink shared channel (PUSCH) transmission channels, receive the N PHRs reported by the terminal, wherein N is an integer greater than or equal to 2, and the N PHRs comprise actual PHRs and/or virtual PHRs.

32. A communication device, comprising:
one or more processors;
wherein the one or more processors are configured to invoke instructions to cause the communication device to perform the reporting method according to any one of claims 1 to 15 and 16 to 28.

33. A communication system, comprising a terminal and a network device, wherein the terminal is configured to perform the reporting method according to any one of claims 1 to 15, and the network device is configured to perform the reporting method according to any one of claims 16 to 28.

34. A storage medium, having stored therein instructions that, when running on a communication device, cause the communication device to perform the reporting method according to any one of claims 1 to 15 and 16 to 28.
